# EUROPEAN PATENT APPLICATION

(11) **EP 2 131 232 A1**
(43) Date of publication of application: **09.12.2009**
(21) Application number: 07850983.3
(22) Date of filing: 20.12.2007
(51) Int. Cl.: G02F 1/1335, G02F 1/133

(54) **LIQUID CRYSTAL DISPLAY DEVICE**

(30) Priority: 30.03.2007 JP 2007095163
(71) Applicant: Sharp Kabushiki Kaisha, Osaka-shi, Osaka 545-8522 (JP)
(72) Inventor: OGAWA, Katsuya, Osaka-shi, Osaka 545-8522 (JP); FUJIOKA, Kazuyoshi, Osaka-shi, Osaka 545-8522 (JP); FURUKAWA, Tomoo, Osaka-shi, Osaka 545-8522 (JP); SAITOH, Masaaki, Osaka-shi, Osaka 545-8522 (JP); HONGO, Koki, Osaka-shi, Osaka 545-8522 (JP); NANMATSU, Akihiro, Osaka-shi, Osaka 545-8522 (JP); ABURAZAKI, Kazuyuki, Osaka-shi, Osaka 545-8522 (JP); OKA, Takahiro, Osaka-shi, Osaka 545-8522 (JP); NATSUME, Takayuki, Osaka-shi, Osaka 545-8522 (JP)
(74) Representative: Müller - Hoffmann & Partner
(86) International application number: PCT/JP2007/074549
(87) International publication number: WO 2008/129734

(57) **Abstract**

The present invention provides a semi-transmissive or reflective liquid crystal display device in which gray scale inversion is suppressed by appropriately adjusting its voltage-reflection luminance characteristics. The liquid crystal display device of the present invention is a liquid crystal display device including: a pair of substrates; and a liquid crystal layer interposed between the pair of substrates, wherein the liquid crystal display device includes a transmission region and a reflection region, the reflection region includes a first section and a second section, a thickness of the liquid crystal layer in the first section is larger than half of but equal to or smaller than a thickness of the liquid crystal layer in the transmission region, and a thickness of the liquid crystal layer in the second section is larger than the thickness of the liquid crystal layer in the transmission region.

## Description

### TECHNICAL FIELD

The present invention relates to a liquid crystal display device. More specifically, the present invention relates to a liquid crystal display device that can be used under external light.

### BACKGROUND ART

Liquid crystal display devices are now being widely used in electronic apparatuses such as a monitor, a projector, a mobile phone, and a PDA (personal digital assistant), because of its characteristics such as slimprofile, light weight, and low power consumption. Transmissive, reflective, and semi-transmissive (transflective) liquid crystal devices and the like are known as such liquid crystal display devices. The transmissive liquid crystal display device provides display by guiding light from the back side, such as light from a backlight that is arranged on the back side of a liquid crystal display panel, into the inside of the panel, and externally outputting the light. The reflective liquid crystal display device provides display by guiding light from the front side (observation side), such as surrounding light or light from a front light, into the inside of the panel, and reflecting the light. In contrast, the transflective liquid crystal display device provides transmissive display using light from the back side under relatively dark environments such as indoor environment and provides reflective display using light from the front side under relatively bright environments such as outdoor environment. That is, the transflective liquid crystal display device shows excellent visibility under bright environment, like the reflective liquid crystal display device, and also shows excellent visibility under dark environment, like the transmissive liquid crystal display device.

However, according to the semi-transmissive liquid crystal display device, if a liquid crystal layer has a uniform thickness (cell gap is uniform) as in the transmissive or reflective liquid crystal display device, that is, if a liquid crystal layer thickness in a region that contributes to transmissive display (transmission region) is the same as that in a region that contributes to reflective display (reflection region), voltage-luminance characteristics in the reflection region (voltage-reflection luminance characteristics) are different from those in the transmission region (voltage-transmission luminance characteristics).
Specifically, the voltage-reflection luminance characteristics dramatically vary compared with the voltage-transmission luminance characteristics. This is because the light that is used for transmissive display enters the liquid crystal display panel from the back side and passes through the liquid crystal layer only once before being outputted but the light that is used for reflective display enters the panel from the front side and passes through the layer twice before being outputted. Accordingly, in order to prevent a reduction in transmittance, a phenomenon such as gray scale inversion of reflective display, and the like, liquid crystals in the transmission region and those in the reflection region need to be driven by different voltages, by driving the pixel electrode in the transmission region and that in the reflection region separately.

For this problem, for example, Patent Document 1 discloses that what is called a multi-gap structure is formed in a liquid crystal cell to adjust a liquid crystal layer thickness in a transmission region to about half a liquid crystal layer thickness in a reflection region. According to this method, voltage-transmission luminance characteristics and voltage-reflection characteristics can be uniformed, and so liquid crystals in the transmission region and those in the reflection region can be driven by the same voltage. However, this method has room for improvement in terms of increase in costs because additional processes need to be performed for forming the multi-gap structure.

In view of the above problem, for example, Patent Documents 2 and 3 disclose that without forming the multi-gap structure, the voltage-reflection luminance characteristics and the voltage-transmission luminance characteristics are adjusted so as to be uniform in the following manner: an alignment control projection and an opening that is a slit of a pixel electrode are formed in both of the transmission region and the reflection region so that a proportion of an area of the projection and a proportion of an area of the opening in the reflection region are larger than those in the transmission region, and a voltage drop due to the projection is utilized.
[Patent Document 1]
   Japanese Kokai Publication No. 2004-279565
[Patent Document 2]
   Japanese Kokai Publication No. 2004-198920
[Patent Document 3]
   Japanese Kokai Publication No. 2004-206080

### DISCLOSURE OF INVENTION

However, according to the methods in Patent Documents 2 and 3, the gray scale inversion is more remarkably observed due to inversion of the voltage-reflection luminance characteristics. If the thickness of the liquid crystal layer is larger than a designed value because of production error, qualities in reflective display are often reduced. In such a point, the methods in Patent Documents 2 and 3 have room for improvement.

The present invention has been made in view of the above-mentioned state of the art. The present invention has an object to provide a liquid crystal display device in which the gray scale inversion is suppressed by adjusting its voltage-reflection luminance characteristics.

The present inventors made various investigations on a normally black liquid crystal display device including a pair of substrates and a liquid crystal layer interposed between the pair of substrates. The inventors noted that a configuration in which the liquid crystal layer in the transmission region and that in the reflection region have the same thickness. In such a configuration, the reflection region and the transmission region have the same structure except for the existence of a reflective film. Accordingly, processes that are performed only for forming the reflection region do not need to be additionally performed if a metal film (a wiring such as a storage capacitor wiring, a source wiring, a gate wiring, a metal member that is formed together with these wirings, and the like) in a liquid crystal display panel is used as the reflective film. In the reflection region, light that is used for display passes through the liquid crystal layer twice, and so a retardation value of the liquid crystal layer that contributes to display (also referred to as an "effective retardation") is twice as large as a retardation value of the liquid crystal layer in the transmission region. Accordingly, if a voltage that is applied to the panel having the above-mentioned configuration increases from 0V, a reflection luminance monotonically increases as the applied voltage increases after the applied voltage exceeds a level where the luminance begins to vary (also referred to as "the first local minimum voltage"). However, the reflection luminance shows the local maximum value at a voltage lower than an applied voltage where a transmission luminance shows the maximum value and then the reflection luminance monotonically decreases as the applied voltage increases. That is, inversion of the voltage-reflection luminance characteristics is generated. As a result, in the liquid crystal display device, what is called gray scale inversion in reflective display is generated.

The present inventors further made investigations on a structure in which the gray scale inversion in reflective display can be suppressed. The inventors noted that the reflection region includes a section where the liquid crystal layer thickness is larger than that in the transmission region. The inventors found that an effective retardation value of the liquid crystal layer in this section is more than twice as large as that of the liquid crystal layer in the transmission region. So a luminance of this section shows at least two local maximum values before the applied voltage reaches a level where the transmission luminance shows the maximum value. That is, the inventors found that as the applied voltage increases, the luminance of this section monotonically increases twice or more before the applied voltage reaches a level where the transmission luminance shows the maximum value.

The inventors found the followings. In addition to a section having the same liquid crystal layer thickness as that in the transmission region (hereinafter, also referred to as "the first section"), a section where the liquid crystal layer thickness is larger than that in the transmission region (hereinafter, also referred to as "the second section") is formed in the reflection region. According to this configuration, a monotonic decrease of the luminance of the first section can be compensated by the second or later monotonic increase of the luminance in the second section, and so an applied voltage where the luminance in reflective display (luminance in the entire reflection region) has the local maximum value is increased. As a result, the gray scale inversion in reflective display can be suppressed.

Further, the inventors found the followings. In the reflection region, a section where the liquid crystal layer thickness is smaller than that in the first section (hereinafter, also referred to as "the third section") is formed, in addition to the first and second sections. According to such a configuration, a luminance of the third section shows the local maximum value at an applied voltage larger than the voltage level where the luminance of the first section shows the local maximum value. So the monotonic decrease of the luminance of the first section can be compensated not only by the second or later monotonic increase of the luminance of the second section but also by the first monotonic increase of the luminance of the third section. As a result, the gray scale inversion in reflective display can be easily suppressed.

The inventors found that the first section can be formed without any additional processes by using metal films that are arranged in the liquid crystal panel as a reflective film for reflective display because the liquid crystal layer thickness in the first section is the same as that in the transmission region and the first section and the transmission region have the same structure except for the existence of the reflective film. Further, the inventors found that the second section can be formed without any additional processes by using metal films that are arranged in the liquid crystal panel as the reflective film for reflective display; and further by using, as means for giving a thickness larger than that in the transmission region to the liquid crystal layer in the second section, an original opening that is provided for an insulating film (interlayer insulating film and the like) (a through-hole that penetrates the film) below a pixel electrode, or a depression that is arranged together with the original opening (a depression that does not penetrate the insulating film but depresses the liquid crystal layer side-surface of the insulating film). The inventors also found that the third section can be formed without any additional processes by using metal films that are arranged in the liquid crystal panel as the reflective film for reflective display; and arranging, as means for giving a thickness smaller than that of the liquid crystal layer in the first section to the liquid crystal layer in the third section, a projection for controlling alignment of liquid crystals in the liquid crystal layer only in the third section; and forming the third section to have the same structure as in the first section other than the existence of the projection. That is, the liquid crystal display device that can suppress the gray scale inversion of reflective display can be easily produced by a common production method of a transmissive liquid crystal display device without any additional processes.

The advantages of the present invention, that is, suppression of the gray scale inversion in reflective display of the present invention can be theoretically obtained when the liquid crystal layer thickness in the first section is the same as that in the transmission region; and when the liquid crystal layer thickness in the first section is larger than half of but smaller than that in the transmission region. Further, such advantages can be obtained regardless of whether the liquid crystal display device is in normally black mode or normally white mode. As a result, the above-mentioned problems have been admirably solved, leading to completion of the present invention.

That is, the present invention is a liquid crystal display device including: a pair of substrates; and a liquid crystal layer interposed between the pair of substrates, wherein the liquid crystal display device includes a transmission region and a reflection region, the reflection region includes a first section and a second section, a thickness of the liquid crystal layer in the first section is larger than half of but equal to or smaller than a thickness of the liquid crystal layer in the transmission region, and a thickness of the liquid crystal layer in the second section is larger than the thickness of the liquid crystal layer in the transmission region.
The present invention is mentioned in detail below.

The liquid crystal display device of the present invention includes a pair of substrates and a liquid crystal layer interposed between the pair of substrates. Liquid crystal display devices provide display by varying a voltage applied between a pair of pixel electrodes arranged on one or both substrates, and thereby varying a retardation value of the liquid crystal layer in each pixel region. The "pixel electrode" used herein means an electrode arranged to drive liquid crystals. As the liquid crystal display device in which a pair of pixel electrodes is separately arranged in the pair of substrates, the following modes are mentioned: a TN (twisted nematic) mode in which liquid crystal molecules are aligned during no voltage application in such a way that the longitudinal axes of the molecules are substantially parallel to a substrate surface and the molecules continuously twist by a predetermined angle (twist angle) between a pair of substrates, and the liquid crystal molecules realigned by voltage application in such a way that the longitudinal axes of the molecules are parallel to an electric field direction, and thereby display is provided; VA (vertical alignment) mode in which liquid crystal molecules that are aligned in the direction approximately perpendicular to the substrate surface under no voltage application are inclined by application voltage, and thereby display is provided; and OCB (optically compensated birfringence) mode in which a three-dimensional optical compensation is performed by providing an alignment structure which is optically complementary in the liquid crystal thickness direction (bend alignment) and using a retardation film. As the liquid crystal display device in which a pair of pixel electrodes are formed together in one substrate, IPS (in-plane switching) mode in which liquid crystals are rotated in a substrate plane by a lateral electric field applied between a pair of comb-shaped electrodes that are provided on one substrate is mentioned. The liquid crystal display device of the present invention may be a normally black one (the light transmittance or the luminance under the driving voltage is in an off-state is lower than that under the driving voltage is in an on-state), or may be a normally white one (the light transmittance or the luminance under the driving voltage is in an off-state is higher than that under the driving voltage is in an on-state).

The above-mentioned liquid crystal display device has a transmission region and a reflection region. The "transmission region" used herein means a region that contributes to transmissive display. The "reflection region" used herein means a region that contributes reflective display. That is, light used for transmissive display passes through the liquid crystal layer in the transmission region and light used for reflective display passes through the liquid crystal layer in the reflection region. In the present invention, a voltage applied between the pixel electrodes is generally the same between the transmission region and the reflection region. That is, the liquid crystal in the transmission region and that in the reflection region are generally driven by the same voltage. If the liquid crystal in the transmission region and that in the reflection region are driven by different voltages for example, switching elements such as a TFT (thin film transistor) need to be arranged in the respective regions. This complicates the pixel structure, and as a result, an area of the opening might be decreased.

According to the above-mentioned liquid crystal display device, the reflection region has the first section and the second section. The liquid crystal layer thickness in the first section is larger than half of but equal to or smaller than that in the transmission region. The liquid crystal layer thickness in the second section is larger than that in the transmission region.
A normally black liquid crystal display device is mentioned first. Light used for transmissive display (e.g., light from a backlight) passes through the liquid crystal layer in the transmission region only once, and in contrast, light used for reflective display (e.g., external light, light from a front light) passes through the liquid crystal layer in the reflection region twice. So an effective retardation value of the reflection region, which is determined based on the liquid crystal layer thickness that is twice as larger as that of the transmission region, needs to be taken into consideration. The liquid crystal layer thickness in the first section is larger than half of but equal to or smaller than the liquid crystal layer thickness in the transmission region. So an effective retardation value of the liquid crystal layer in the first section is larger than that of the liquid crystal layer in the transmission region if the liquid crystals in the transmission region and those in the reflection region (the first section) are driven by the same voltage. Accordingly, an applied voltage where the luminance of the first section shows the local maximum value first time (hereinafter, also referred to as "the first local maximum voltage", and an applied voltage where the reflection luminance shows the local maximum value m-th time (m is an integer of 2 or more) is also referred to as "the m-th local maximum voltage") is smaller than the first local maximum voltage of the transmission region when the voltage-luminance characteristics of the first section are plotted on a graph where the abscissa shows the voltage applied between the pixel electrodes and the ordinate shows the luminance. If a voltage larger than the first local maximum voltage of the first section (e.g., the first local maximum voltage of the transmission region) is applied, the effective retardation value of the liquid crystal layer in the first section is larger than an effective retardation value where the luminance of the first section has the local maximum value first, and so the luminance of the first section monotonically decreases as the applied voltage increases.

The second section has a liquid crystal layer thickness larger than that in the transmission region, and so the effective retardation value of the liquid crystal layer in the second section can be more than twice as large as the retardation value where the transmission luminance shows the local maximum value first. According to the voltage-luminance characteristics of the second section, when an applied voltage is increased from 0V, a voltage where the luminance in the second section begins to vary (the first local minimum voltage, and hereinafter an applied voltage where the luminance shows the minimum value m-th time (m is an integer of 2 or more) is also referred to as "the m-th local minimum voltage"), the second local minimum voltage, and the second local maximum voltage appear in this order until the applied voltage reaches the first local maximum voltage of the transmission region. Further, the luminance of the second section monotonically increases as the applied voltage increases (this monotonic increase part is also referred to as "the n-th monotonic increase part") within a range from the n-th local minimum voltage (n is the natural number) to the n-th local maximum voltage. Further, within the range form the n-th local maximum voltage to the (n+1)-th local minimum voltage, the luminance of the second section monotonically decreases as the applied voltage increases (this monotonic decrease part is also referred to as "the n-th monotonic decrease part").

According to the normally black liquid crystal display device in the present invention, the reflection region includes the first and second sections, and so the voltage-luminance characteristics in the first section and those in the second section are compensated for each other. That is, the monotonic decrease part of the luminance, shown around the first local maximum voltage, of the first section can be compensated by the second or later monotonic increase part of the luminance of the second section. As a result, the gray scale inversion in reflective display can be suppressed.

Similarly, in the normally white liquid crystal display device of the present invention, the reflection region has the first and second sections, and the first monotonic increase part of the luminance, shown around the first local minimum voltage, of the first section can be compensated by the second or later monotonic decrease part of the second section. As a result, the gray scale inversion in reflective display can be suppressed. Thus, the liquid crystal display device of the present invention can be used in an environment where light such as external light enters the device from the front side, regardless of normally black mode or normally white mode, because such a device shows optimum voltage-reflection luminance characteristics.

The "liquid crystal layer thickness" used herein is also referred to as a cell gap. In the present invention, the liquid crystal layer thickness in the transmission region is uniform. That is, the transmission region has a uniform liquid crystal layer thickness. The liquid crystal layer thickness in the transmission region is generally a distance between a pair of pixel electrodes that are arranged separately in the transmission regions of the pair of substrates, in TN, VA, OCB liquid crystal display devices. In an IPS liquid crystal display device, the liquid crystal layer thickness is generally a distance between a comb-tooth electrode (pixel electrode) that is arranged in the transmission region on one substrate and a member that is arranged to be the closest to the liquid crystal layer in the transmission region on the other substrate (other than a projection for controlling alignment of liquid crystals in the liquid crystal layer and an alignment film). For example, if a projection is arranged above a pixel electrode in a transmission region and so the transmission region includes a section where the projection is arranged and a section free from the projection, and the section where the projection is arranged has a liquid crystal layer thickness smaller than a liquid crystal layer thickness in the section free from the projection by the height of the projection, the liquid crystal layer thickness in the transmission region is not an average value of the liquid crystal layer thickness in these sections, but the liquid crystal layer thickness in the section free from the projection.

The above-mentioned first and second sections each have a uniform liquid crystal layer thickness. That is, according to the present invention, each of the first and second sections has a uniform liquid crystal layer thickness. However, unlike the liquid crystal layer thickness in the transmission region, the liquid crystal layer thicknesses in the respective sections constituting the reflection region vary depending on the existence of the projection for controlling alignment of liquid crystal in the liquid crystal layer. For example, if a projection is arranged above a pixel electrode in a reflection region and so the reflection region includes a section where the projection is arranged and a section free from the projection, and the section where the projection is arranged has a liquid crystal layer thickness smaller than a liquid crystal layer thickness in the section free from the projection by the height of the projection, in TN, VA, OCB liquid crystal display devices, the liquid crystal layer thickness in the section where the projection is arranged is smaller than that in the section free from the projection by the height of the projection even if the distance between the pixel electrodes is the same between the two sections.

The existence of the opening (slit and the like) of the pixel electrode hardly influences the thickness of the liquid crystal layer. So according to the present invention, the liquid crystal layer thickness in the region where the opening of the pixel electrode is arranged is regarded to be the same as that in the region where the corresponding pixel electrode is arranged. In addition, according to the present invention, the region where the opening of the pixel electrode is arranged is regarded as a region that does not contribute to display, and so such a region belongs to neither the transmission region nor the reflection region.

The liquid crystal layer thickness in the above-mentioned transmission region is not especially limited, but if the liquid crystal layer display device of the present invention is in normally black mode (normally white mode), it is preferable that the maximum retardation value of the liquid crystal layer in the transmission region is the retardation value or less where the transmission luminance shows the local maximum (minimum) value first time. The gray scale inversion in transmissive display might be generated if the retardation maximum value of the liquid crystal layer in the transmission region exceeds the retardation value where the transmission luminance shows the local maximum (minimum) value first time. If the liquid crystal display device of the present invention is in normally black (normally white) mode, it is more preferable that the retardation maximum value of the liquid crystal layer in the transmission region is the same as the retardation value where the transmission luminance shows the local maximum (minimum) retardation first time. As a result, the maximum transmission luminance can be shown without gray scale inversion in theory.

The liquid crystal layer thickness in the first section is not especially limited as long as it is larger than half of but equal to or smaller than the liquid crystal layer thickness in the transmission region. However, it is preferable that the thickness of the liquid crystal layer in the first section is the same as the thickness of the liquid crystal layer in the transmission region. According to this, the first section has the same structure as in the transmission region except for the existence of the reflective film. So the first section can be formed without any additional processes by using metal films (wirings such as a storage capacitor wiring, a source wiring, and a gate wiring, metal members formed with these wirings, and the like) in the liquid crystal display panel as a reflective film for reflective display.

The liquid crystal layer thickness in the second section is not especially limited as long as it is larger than the liquid crystal layer thickness in the transmission region. If the first section and the transmission region have the same liquid crystal layer thickness, it is preferable that the liquid crystal layer in the second section is 1.1 to 3 times as large as that in the transmission region (the first section). If the liquid crystal layer thickness in the second section is less than 1.1 times as large as that in the transmission region (the first section), the compensation attributed to the second monotonic increase of the second section might not be sufficiently obtained. So the voltage where inversion of the total voltage-luminance characteristics of the reflection region is generated might be shifted to the low voltage side. If the liquid crystal layer thickness in the second section is more than 3 times as large as that in the transmission region (the first section), the first local maximum voltage, the second local minimum voltage, and the second local maximumvoltage in the second section are largely shifted to the lower voltage side. So the total voltage-luminance characteristics of the reflection region do not show the monotonic increase before the first local maximum voltage, and the voltage where inversion of the reflection luminance is generated is shifted to the low voltage side. It is more preferable that the liquid crystal layer thickness in the second section is 1.5 to 2.5 times as large as that in the transmission region (the first section) if the first section and the transmission region have the same liquid crystal layer thickness.

The liquid crystal display device of the present invention is not especially limited and may or may not include other components as long as it includes the above-mentioned pair of substrates and a liquid crystal layer as components. The following embodiment is mentioned as a preferable embodiment of the liquid crystal display device of the present invention. The first polarizer and the first 1/4 wavelength plate are attached on a back side of a back side-substrate in this order from the back side to a liquid crystal layer, and the second polarizer and the second 1/4 wavelength plate are attached to an observation side of an observation side-substrate in this order from the observation side to the liquid crystal layer. The first 1/4 wavelength plate ("λ/4 retarder", a wavelength plate with optic anisotropy, which causes an optical path difference of λ/4 between two polarization components oscillating vertically to each other) is arranged so that the absorption axis of the first polarizer and the phase delay axis of the first 1/4 wavelength plate make an angle of 45°. The second 1/4 wavelength plate is arranged so that the absorption axis of the second polarizer and the phase delay axis of the second 1/4 wavelength plate make an angle of 45°, and the phase delay axis of the first 1/4 wavelength plate and the phase delay axis of the second 1/4 wavelength plate make an angle of 90°. The liquid crystal display device in this embodiment is what is so-called a semi-transmissive liquid crystal display device, and it mainly provides transmissive display in a relatively dark environment and mainly provides reflective display in a relatively bright environment.

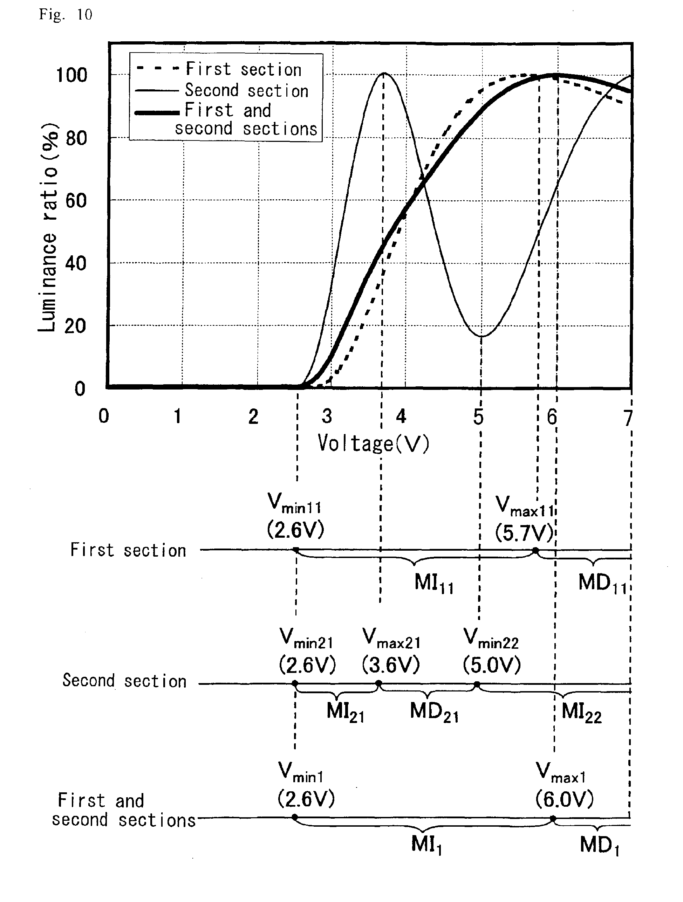

Preferable embodiments of the liquid crystal display device of the present invention are mentioned below in detail.
The case that the liquid crystal display device of the present invention is in normally black mode is mentioned first. The normally black liquid crystal display device of the present invention is not especially limited as long as the first monotonic decrease part of the luminance, shown around the first local maximumvoltage, of the first section is compensated by the second or later monotonic increase part of the luminance of the second section. For example, as shown in Fig. 10, it is preferable that the first monotonic decrease part MD11 of the luminance, shown around the first local maximum voltage Vmax11, of the first section is compensated by the second monotonic increase part MI22 of the luminance of the second section. That is, it is preferable that the liquid crystal display device is a normally black liquid crystal display device, a second local minimum voltage of the second section is not larger than a first local maximum voltage of the first section, and a second local maximum voltage of the second section is larger than the first local maximum voltage of the first section. If the first monotonic decrease part of the luminance, shown around the first local maximum voltage, of the first section is compensated by the third or later monotonic increase part of the luminance of the second section, the second monotonic decrease part of the second section is highly likely to overlap with a moderate monotonic increase part, shown around the first local maximum voltage, of the first section. So the total voltage-luminance characteristics of the reflection region, obtained by compensating the voltage-luminance characteristics in the first section and those in the second section for each other, might not show a monotonic increase tendency (i.e., the voltage-reflection luminance characteristics vary).

Because of the same reasons, the following embodiments are preferable also for the liquid crystal display device that is in normally white mode of the present invention. It is preferable that the first monotonic increase part of the luminance, shown around the first local minimum voltage, of the first section can be compensated by the secondmonotonic decrease part of the luminance of the second section. That is, it is preferable that the liquid crystal display device is a normally white liquid crystal display device, a second local maximum voltage of the second section is not larger than a first local minimum voltage of the first section, and a second local minimum voltage of the second section is larger than the first local minimum voltage of the first section.

It is preferable that a liquid crystal layer side-surface of one of the pair of substrates is flat between the transmission region and the first section, the liquid crystal layer side-surface of the one of the pair of substrates is depressed in the second section, a liquid crystal layer side-surface of the other substrate is flat among the transmission region, the first section, and the second section. That is, it is preferable that a liquid crystal layer side-surface of one of the pair of substrates is flat between the transmission region and the first section, the liquid crystal layer side-surface of the one of the pair of substrates is depressed in the second section, a liquid crystal layer side-surface of the other substrate is flat among the transmission region, the first section, and the second section. This embodiment can be provided, for example, by using an opening that is originally arranged in an insulating film that is below a pixel electrode, a depression that is formed together with the opening, and the like, as means for depressing the liquid crystal layer side-surface of one substrate in the second section. According to this, photolithography does not need to be performed for multi-gap structure. As a result, production costs can be reduced. The "liquid crystal layer side-surface of the substrate" used herein means a surface that is in contact with the liquid crystal layer of the substrate.

The substrate in which the liquid crystal layer surface is flat among the transmission region, the first section, and the second section (substrate where the liquid crystal layer thickness relatively less varies) is an observation side-substrate and the other substrate (substrate where the liquid crystal layer thickness relatively highly varies) is a back side-substrate. Alternatively, the substrate in which the liquid crystal layer surface is flat among the transmission region, the first section, and the second section is a back side-substrate and the other substrate is an observation side-substrate.

It is preferable that at least one of the pair of substrates includes: a conductive part; an insulating film covering the conductive part; a pixel electrode formed above the insulating film, the pixel electrode being connected to the conductive part through an opening formed in the insulating film in the second section, and the opening depresses the liquid crystal layer side-surface of the at least one of the pair of substrates in the second section. According to this, an original opening that is used for connecting the conductive part to the pixel electrode (opening of the insulating film) can be used for forming the second section, and so such an opening does not need to be additionally formed. As a result, such an embodiment is preferable in terms of costs. The "conductive part" used herein means not only a member made of a conductive material but also a member made of a semiconductor material. The conductive part is not especially limited, and a drain electrode and the like of a thin film transistor (TFT) is mentioned. The shape of the opening is not especially limited. Examples of a cross-sectional shape of the opening include: a trapezoidal shape, a rectangular shape, a square shape, and curved shapes thereof. Examples of a plan shape of the opening include a square shape, an elliptical shape, and a circular shape.

It is preferable that at least one of the pair of substrates includes a pixel electrode and an insulating film formed below the pixel electrode (on the side opposite to the side where the liquid crystal layer is arranged), and the insulating film has a depression that depresses the liquid crystal layer side-surface of the at least one of the pair of substrates in the second section (the depression does not penetrate the insulating film but depresses the liquid crystal layer side-surface of the insulating film). According to this, the depth of the depression for forming the second section can be appropriately adjusted up to the thickness of the insulating film. So the design can be more flexible. Further, this depression can be formed together with an opening that is originally used for connecting the conductive part to the pixel electrode, and the like. So, this embodiment is preferable in terms of costs. The shape of the depression is not especially limited. Examples of a cross-sectional shape of the depression include: a trapezoidal shape, a rectangular shape, a square shape, and curved shapes thereof. Examples of a plan shape of the depression include a square shape, an elliptical shape, and a circular shape. The depression for forming the second section is generally formed in an insulating film having a thickness of about several micrometers, and so it is more efficient to form the depression in the substrate where such an insulating film is arranged. That is, if such an insulating film is formed in the back side-substrate, it is preferable that the depression for forming the second section is formed on the back side-substrate. If such an insulating film is formed in the observation side-substrate, it is preferable that the depression for forming the second section is formed on the observation side-substrate.

It is preferable that the second section has an area smaller than an area of the first section. The proportion of the area of each section in the reflection region determines a contribution rate (influence degree) of the voltage-luminance characteristics of the respective sections relative to the voltage-reflection luminance characteristics. So if the second section has an area larger than that of the first section, the total voltage-reflection luminance characteristics of the reflection region might not have a monotonic increase tendency (the reflectance might decrease or not vary even if the applied voltage is increased). Accordingly, the second section is formed to have an area smaller than that of the first section, and thereby the voltage-luminance characteristics of the first section are compensated by those of the second section. As a result, the voltage-reflection luminance characteristics can be appropriately adjusted.

In the present description, the area of each section constituting the reflection region is basically an area of the bottom of the depression if the depression is formed, and it is basically an area of the bottom of the projection if the projection is formed. If the depression or projection has a tapered part (has an inclined plane with an taper angle of more than 0° and less than 90°) (the depression or projection has a forward-tapered cross sectional shape), the area means an area of the depression or projection as being viewed in plane. If the depression has a reverse tapered part (has an inclined plane with a taper angle of more than 90° and less than 180°) (the depression or projection has a reverse tapered cross-sectional shape), the depression or projection is sandwiched by a continuous pixel electrode that covers the surface of the reverse tapered part, and so the liquid crystals do not normally operate. Accordingly, the area of the reverse tapered part is not included in the area of the each section.

Between the first and second sections, the voltage that is applied to the liquid crystal layer maybe the same or different. Examples of a method of applying different voltages to the first and second sections include: methods in which a switching element such as a thin film transistor (TFT) is formed in each section to apply different voltages to the pixel electrodes in the respective sections; and in which by utilizing a voltage drop due to a dielectric substance, only a voltage applied to the liquid crystal layer in one section is decreased, or voltages applied to the liquid crystal layer in the respective sections are decreased separately. However, according to the former method, the panel (pixel) has a complicated structure and further, disadvantages such as an increase in processes and a reduction in aperture ratio might arise. According to the latter method, loss in transmission efficiency of the dielectric substance itself is mentioned, and disadvantages such as a reduction in reflectance might arise. From these viewpoints, it is preferable that a voltage applied to the liquid crystal layer is the same between the first section and the second section. That is, it is preferable that a voltage applied to the liquid crystal layer is the same between the first section and the second section.

It is preferable in the above-mentioned liquid crystal display device that the reflection region further includes a third section, and a thickness of the liquid crystal layer in the third section is smaller than the thickness of the liquid crystal layer in the first section. The effective retardation value of the liquid crystal layer in the third section is always smaller than the effective retardation value of the liquid crystal layer in the first section. That is, in the normally black liquid crystal display device, the first local maximum voltage of the third section is larger than the first local maximum voltage of the first section. So the luminance of the third section monotonically increases as the applied voltage increases also as shown around the first local maximum voltage of the first section. Accordingly, in the normally black liquid crystal display device, the gray scale inversion in reflective display can be more suppressed because the voltage-luminance characteristics of the first section can be compensated by those of the second and third sections, that is, the monotonic decrease part of the luminance, shown around the first local maximum voltage, of the first section can be compensated by the second or later monotonic increase part of the luminance of the second section and the first monotonic increase part of the luminance of the third section. Similarly, in the normally white liquid crystal display device, the gray scale inversion in reflective display can be more suppressed if the reflection region includes the third section having a liquid crystal layer thickness smaller than that of the first section.

In the present invention, the liquid crystal layer thickness in the third section is uniform. That is, the third section has a uniform liquid crystal layer thickness. The "having a liquid crystal layer thickness smaller than the liquid crystal layer thickness in the first section" means only that the third section has a liquid crystal layer smaller than the uniform liquid crystal layer thickness the first section has. Accordingly, as long as being smaller than the liquid crystal layer thickness in the first section, the liquid crystal layer thickness in the third section may be larger than half of but smaller than that in the transmission region.

The normally black liquid crystal display device of the present invention is not especially limited as long as the first monotonic decrease part of the luminance, shown around the first local maximum voltage, of the first section is compensated by the second or later monotonic increase part of the luminance of the second section and the first monotonic increase part of the luminance of the third section. It is preferable that the first monotonic decrease part of the luminance, shown around the first local maximum voltage, of the first section is compensated by the second monotonic increase part of the luminance of the second section and the first monotonic increase part of the luminance of the third section. That is, it is preferable that the liquid crystal display device is a normally black liquid crystal display device, a second local minimum voltage of the second section is not larger than a first local maximum voltage of the first section, a second local maximum voltage of the second section is larger than the first local maximum voltage of the first section, a first local minimum voltage of the third section is not larger than the first local maximum voltage of the first section, and a first local maximum voltage of the third section is larger than the first local maximum voltage of the first section. If the first monotonic decrease part of the luminance, shown around the first local maximum voltage, of the first section is compensated by the third or later monotonic increase part of the luminance of the second section and the first monotonic increase part of the luminance of the third section, the second monotonic decrease part of the second section is highly likely to overlap with a moderate monotonic increase part shown around the first local maximum voltage of the first section. So the total voltage-reflection luminance characteristics of the reflection region might not have a monotonic increase tendency (i.e., the luminance decreases or increases as the voltage increases).

Similarly, also in the normally white liquid crystal display device, it is preferable that the first monotonic increase part of the luminance, shown around the first local minimum voltage, of the first section can be compensated by the second monotonic decrease part of the luminance of the second section and the first monotonic decrease part of the luminance of the third section. That is, it is preferable that the liquid crystal display device is a normally white liquid crystal display device, a second local maximum voltage of the second section is not larger than a first local minimum voltage of the first section, a second local minimum voltage of the second section is larger than the first local minimum voltage of the first section, a first local maximum voltage of the third section is not larger than the first local minimum voltage of the first section, and a first local minimum voltage of the third section is larger than the first local minimum voltage of the first section.

It is preferable that a voltage applied to the liquid crystal layer in the third section is smaller than a voltage applied to the liquid crystal layer in the first section. The third section has a liquid crystal layer thickness smaller than that in the first section. So the luminance at the first monotonic increase part of the third section increases moderately compared to the luminance at the first monotonic increase part of the first section. In addition, if the voltage applied to the liquid crystal layer in the third section is set to be smaller than that applied to the liquid crystal layer in the first section, the luminance at the first monotonic increase part of the third section can increase moderately compared to the luminance at the first monotonic increase part of the first section. So the gray scale inversion in reflective display can be further suppressed. It is more preferable that the voltage applied to the liquid crystal layer is the same between the first section and the second section and the voltage applied to the liquid crystal layer in the third section is smaller than the voltage applied to the liquid crystal layer in the first and second sections. Examples of such an embodiment include: an embodiment in which the voltage applied to the liquid crystal layer in the first and second sections is the same as the voltage applied between the pixel electrodes, and the voltage applied to the liquid crystal layer in the section where the projection is arranged is smaller than the voltage applied between the pixel electrodes.

It is preferable that an observation side-substrate or a back side-substrate of the pair of substrates includes a projection for controlling alignment of liquid crystals contained in the liquid crystal layer, the projection being arranged in the third section (hereinafter, the projection is also referred to as an "alignment control projection"). According to a VA liquid crystal display device that includes no alignment control projection, for example, a discontinuous line, what is so-called disclination, is generated when a voltage is applied to a liquid crystal layer, and liquid crystals are randomly inclined. This disclination might cause afterimages and the like. This disclination might be observed as image unevenness like a stain when the panel is observed in oblique directions because the liquid crystals in the respective alignment regions have different viewing characteristics. That is, the alignment control projection can stabilize alignment of liquid crystals, and thereby the afterimages, the image unevenness, and the like, can be suppressed. The alignment control projection is made of a dielectric substance (insulating material), and so it causes a voltage drop, and by applying a voltage smaller than that applied to the liquid crystal layer in the first section, to the liquid crystal layer in the third section, the first local maximumvoltage of the reflection region can be increased. According to the present invention, the second section is arranged in the reflection region, and so the monotonic decrease part of the luminance, shown around the first local maximum voltage, of the third section also can be compensated by the second or later monotonic increase part of the second section in the normally black liquid crystal display device. So the gray scale inversion in reflective display can be suppressed, and simultaneously, the first local maximum voltage in the reflection region can be more increased. In the normally white liquid crystal display device, the monotonic increase part, shown around the first local minimum voltage, of the third section also can be compensated by the second or later monotonic decrease part in the second section. So the gray scale inversion in reflective display can be suppressed, and simultaneously, the first local minimum voltage of the reflection region can be more increased. That is, according to the present invention, attributed to that the reflection region includes the first, second, and third sections, a difference between the voltage-reflection luminance characteristics and the voltage-transmission luminance characteristics can be more decreased.

The material for the above-mentioned projection is not especially limited as long as it is a dielectric substance (insulating material). The shape of the projection is not especially limited as long as it can control alignment of the liquid crystals contained in the liquid crystal layer. The plan shape of the projection is a linear shape, a dotted shape, and the like. The cross-sectional shape of the projection is a triangular, trapezoidal, semicircular shape, and the like. The projection may be formed not only in the reflection region but also in the transmission region. The projection in the reflection region may control the alignment of the liquid crystals contained in the liquid crystal layer in the reflection region, or may control the alignment of the liquid crystal in the liquid crystal layer contained in the transmission region adjacent to the reflection region. The projection arranged in the transmission region also may control alignment of the liquid crystals in the liquid crystal layer in the transmission region or may control alignment of the liquid crystals in the liquid crystal layer in the reflection region adjacent to the transmission region.

The alignment of the liquid crystals in the liquid crystal layer near the back side-substrate of the above-mentioned pair of substrates can be controlled by using an opening (slit and the like) that is formed simultaneously when the pixel electrode is patterned. In order to control alignment of the liquid crystals contained in the liquid crystal layer near the observation side-substrate, a projection or an opening (slit and the like) for alignment control needs to be additionally formed on the observation side-substrate. So if the projection is arranged on the back side-substrate, processes for controlling alignment of the liquid crystals contained in the liquid crystal layer need to be performed for both the observation side-substrate and the back side-substrate. Accordingly, if the projection is arranged, it is preferable that the projection is arranged in the observation side-substrate in order to suppress the increase in production costs. Further, in order to shield the projection from light, a reflective film is arranged such that the reflective film overlaps with the projection as viewed in plan, together with, for example, a reflective member that constitutes the back side-substrate. In this case, it is preferable that the projection is arranged in the back side-substrate. If the projection is arranged in the back side-substrate, the misalignment between the back side-substrate and the observation side- substrate, which causes the misalignment between the reflective film and the projection, can be suppressed. So the area of the transmission region can be secured as much as possible.

It is preferable that a liquid crystal layer side-surface of one of the pair of substrates is flat among the transmission region, the first section, and the third section, the liquid crystal layer side-surface of the one of the pair of substrates is depressed in the second section, a liquid crystal layer side-surface of the other substrate is flat among the transmission region, the first section, and the second section, and the liquid crystal layer side-surface of the other substrate projects in the third section. That is, it is preferable that a liquid crystal layer side-surface of one of the pair of substrates is flat among the transmission region, the first section, and the third section, the liquid crystal layer side-surface of the one of the pair of substrates is depressed in the second section, a liquid crystal layer side-surface of the other substrate is flat among the transmission region, the first section, and the second section, and the liquid crystal layer side-surface of the other substrate projects in the third section. According to such an embodiment, as means for depressing the liquid crystal layer side-surface of the other substrate in the second section, an original opening formed in the insulating film that is arranged below the pixel electrode, a depression formed together with the original opening, and the like, are used, and further, as means for projecting the liquid crystal layer side-surface of the other substrate in the third section, the alignment control projection is used. According to this embodiment, the photolithography does not need to be performed for forming the multi-gap structure, and as a result, the production costs can be reduced.

It is preferable that the substrate where the liquid crystal layer-side surface is flat among the transmission region, the first section, and the third section is the observation side-substrate and the othersubstrate is the backside-substrate. According to this, the projection that is arranged in the third section and the reflective film are formed in the same substrate, and so the misalignment between the substrates does not need to be taken into consideration. As a result, the aperture ratio can be increased. In addition, it is preferable that the substrate where the liquid crystal layer side-surface is flat among the transmission region, the first section, and the third section are the back side-substrate and the other substrate is the observation side-substrate. According to this, the opening of the pixel electrode, which is needed for controlling alignment of the liquid crystals contained in the liquid crystal layer near the back side-substrate, can be formed simultaneously when the pixel electrode is patterned. So the back side-substrate can be formed without increase in the number of processes.

It is preferable that the second section has an area smaller than an area of the third section. A contribution rate (influence degree) of the voltage-luminance characteristics of the respective sections relative to the voltage-luminance characteristics of the reflection region (relative to the voltage-reflection luminance characteristics) depends on a proportion of an area of the respective sections in the reflection region. So if the second section has an area larger than that of the third section, the reflection luminance might not monotonically increase as the applied voltage increases in the normally black liquid crystal display device. In the normally white liquid crystal display device, the reflection luminance might not monotonically decrease as the applied voltage increases. That is, the second section is formed to have an area smaller than that of the third section, and thereby in the normally black liquid crystal display device, the reflection luminance can be adjusted to monotonically increase as the applied voltage increases, and in the normally white liquid crystal display device, the reflection luminance can be adjusted to monotonically decrease as the applied voltage increases.

According to the liquid crystal display device of the present invention, the liquid crystal layer thickness in each section, the area of each section, and the voltage applied to the liquid crystal layer in each section, and the like, can be arbitrarily determined as long as the total voltage-luminance characteristics (the total voltage-reflection luminance characteristics of the reflection region) are preferable. Further, the number of sections the reflection region has is not limited to three or less or may be four or more as long as the total voltage-reflection luminance characteristics in the reflection region are preferable. The same operation and advantages can be obtained also in the following embodiments: a section in which the liquid crystal layer thickness is larger than half of but equal to or smaller than the liquid crystal layer thickness in the transmission region is formed in the reflection region, in addition to the first section; a section in which the liquid crystal layer thickness is larger than that in the transmission region is formed in the reflection region, in addition to the second section; a section in which projections different in height are arranged in the reflection region; and a section in which a projection formed on the observation side-substrate and the depression formed on the back side-substrate partially overlap with each other as viewed in plane. The positional relationship to the alignment control projection in the transmission region needs to be taken into consideration so that alignment of liquid crystals contained in the liquid crystal layer in the transmission region is adversely affected.

It is preferable that the liquid crystal display device includes a liquid crystal display panel including: a pair of substrates; a liquid crystal layer interposed between the pair of substrates; and a metal film, and the liquid crystal display device provides reflective display using the metal film. The above-mentioned liquid crystal display panel corresponds to a liquid crystal display device not including a driving circuit, a backlight, and the like. Examples of the metal film include: wirings such as a storage capacitor wiring, a source wiring, and a gate wiring; and metal members that are formed together with these wirings. Thus, if the metal film that is arranged in the liquid crystal display panel is used for reflective display, there is no need to additionally perform a step of forming a film for providing the metal film with reflection functions and to arrange a reflective pixel electrode. So the transflective liquid crystal display device of the present invention can be produced by common production steps for a transmissive liquid crystal display device. The reflective film, which is different from the pixel electrode, is used for reflective display, and thereby the material for the pixel electrode is uniformed to indium tin oxide (ITO) and the like between the transmission region and the reflection region. As a result, flicker that is caused due to the optimum counter voltage between transmissive display and reflective display can be suppressed. If the projection for controlling alignment of the liquid crystals (alignment control projection) is formed, it is preferable that a metal film that is formed to shield the alignment control projection from light (hereinafter, the metal film is also referred to as "shielding metal film") and the like is used for reflective display. It is preferable that the shielding metal film is also formed together with the wirings such as a storage capacitor wiring, a source wiring, and a gate wiring. The above-mentioned shielding metal film and alignment control projection are formed in the same substrate. They may be formed in different substrates, but in such a case, it is preferable that the shielding metal film has a width larger than that of the alignment control projection in view of variation in position that might be caused during production steps, such as accuracy of substrate attachment and accuracy of position of the shielding metal film. As a result, the reduction in contrast in transmissive display can be suppressed.

The display mode of the above-mentioned liquid crystal display device is not especially limited, and TN, VA, IPS, OCB modes, and the like are mentioned. Particularly VA mode is preferable because the alignment control projection, which can be arranged in the third section, is basically included. That is, it is preferable that the liquid crystal display device is a vertical alignment liquid crystal display device.

It is preferable that the liquid crystal display device is a normally black liquid crystal display device. Compared to a normally white liquid crystal display device, the minimum luminance can be significantly decreased, and as a result, a contrast ratio can be improved.

The present invention is also a reflective liquid crystal display device including a pair of substrates and a liquid crystal layer interposed between the pair of substrates, wherein the reflective liquid crystal display device has a reflection region, and the reflection region has an A1 section and an A2 section, the A2 section having a liquid crystal layer thickness larger than that in the A1 section, and a voltage applied to the liquid crystal layer in the A2 section is the same as a voltage applied to the liquid crystal layer in the A1 section. If a reflective liquid crystal display device that is composed of the same materials and components as those in a transmissive liquid crystal display device is produced, liquid crystal layers in the two devices show the same retardation value where the maximum luminance is shown. Accordingly, the optimum liquid crystal layer thickness in the reflective liquid crystal display device is substantially half the optimum liquid crystal layer thickness in the transmissive liquid crystal display device because the number of times light used for display passes through the liquid crystal layer is different regardless of a difference in retardation of a polarizer to be used between the two devices. So if the two devices are compared to each other, leakage is likely to be generated between the substrates in the reflective liquid crystal display device. In contrast, according to the reflective liquid crystal display device of the present invention, the A1 section and the A2 section can be arranged in the reflection region, the A1 section having the same liquid crystal layer thickness as that in the transmissive liquid crystal display device or having a liquid crystal layer thickness larger than half of but smaller than the liquid crystal layer thickness in the transmissive liquid crystal display device, and the A2 section having a liquid crystal layer thickness larger than that in the A1 section. Further, according to the reflective liquid crystal display device of the present invention, the liquid crystal layer in the A1 section can be formed to have a thickness that is the same or larger than that of the transmissive liquid crystal display device. So leakage between the substrates, and the like, can be suppressed. The reflective liquid crystal display device of the present invention has the same configuration as that of the reflection region of the liquid crystal display device of the present invention (specifically, in the first section, the thickness of the liquid crystal layer is the same as that in the transmission region, and in the second section, the voltage applied to the liquid crystal layer is the same as the voltage applied to the liquid crystal layer in the first section). So base on the same principle as in the liquid crystal display device of the present invention, the voltage-reflection luminance characteristics can be appropriately adjusted.

The reflective liquid crystal display device of the present invention is not especially limited and may or may not include other components as long as it includes the above-mentioned pair of substrates and liquid crystal layer as components. The following embodiment is mentioned as a preferable embodiment of the reflective liquid crystal display device of the present invention. A polarizer, and a 1/4 wavelength plate that is arranged so that an angle made by an absorption axis of the polarizer and a delay phase axis of the 1/4 wavelength plate is 45° are arranged on the observation side of the observation side-substrate in this order from the observation side to the liquid crystal layer side. This embodiment could be a basic configuration of a reflective liquid crystal display device.

Preferable embodiments of the reflective liquid crystal display device of the present invention are mentioned. A section (n is the natural number) in the reflective liquid crystal display device of the present invention corresponds to the n-th section in the liquid crystal display device of the present invention. According to a preferable embodiment of the reflective liquid crystal display device of the present invention, the operation and advantages are exhibited based on the same principle as in the reflection region in accordance with the preferable embodiments of the corresponding liquid crystal display device of the present invention (specifically, the liquid crystal display device in the present invention, in which the liquid crystal layer thickness in the first section is the same as that in the transmission region and a voltage applied to the liquid crystal layer in the second section is the same as a voltage applied to the liquid crystal layer in the first section).
It is preferable that the reflective liquid crystal display device is a normally black liquid crystal display device, a second local minimum voltage of the A2 section is not larger than a first local maximum voltage of the A1 section, and second local maximum voltage of the A2 section is larger than the first local maximum voltage of the A1 section.
It is preferable that the reflective liquid crystal display device is a normally white liquid crystal display device, a second local maximum voltage of the A2 section is not larger than a first local minimum voltage of the A1 section, and a second local minimum voltage of the A2 section is larger than the first local minimum voltage of the A1 section.
It is preferable that the liquid crystal layer side-surface of the one of the pair of substrates is depressed in the A2 section and
a liquid crystal layer side-surface of the other substrate is flat between the A1 and A2 sections.
It is preferable that at least one of the pair of substrates includes: a conductive part; an insulating film covering the conductive part; and a pixel electrode formed above the insulating film,
the pixel electrode being connected to the conductive part through an opening formed in the insulating film in the A2 section, and the opening depresses the liquid crystal layer side-surface in the A2 section of the at least one of the pair of substrates.
It is preferable that at least one of the pair of substrates includes a pixel electrode and an insulating film formed below the pixel electrode, and
the insulating film has a depression that depresses the liquid crystal layer side-surface in the A2 section of the at least one of the pair of substrates.
It is preferable that the A2 section has an area smaller than an area of the A1 section.
It is preferable that the reflection region of the reflective liquid crystal display device further includes a A3 section having a liquid crystal layer thickness smaller than the liquid crystal layer thickness in the A1 section.
It is preferable that the reflective liquid crystal display device is a normally black liquid crystal display device, a second local minimum voltage of the A2 section is not larger than a first local maximum voltage of the A1 section,
a second local maximum voltage of the A2 section is larger than the first local maximum voltage of the A1 section,
a first local minimum voltage of the A3 section is not larger than the first local maximum voltage of the A1 section, and
a first local maximum voltage of the A3 section is larger than the first local maximum voltage of the A1 section.
It is preferable that the reflective liquid crystal display device is a normally white liquid crystal display device, a second local maximum voltage of the A2 section is not larger than a first local minimum voltage of the A1 section,
a second local minimum voltage of the A2 section is larger than the first local minimum voltage of the A1 section,
a first local maximum voltage of the A3 section is not larger than the first local minimum voltage of the A1 section, and
a first local minimum voltage of the A3 section is larger than the first local minimum voltage of the A1 section.
It is preferable that a voltage applied to the liquid crystal layer in the A3 section is smaller than voltages applied to the liquid crystal layer in the A1 and A2 sections.
It is preferable that an observation side-substrate of the pair of substrates includes a projection for controlling alignment of liquid crystals contained in the liquid crystal layer, the projection being arranged in the A3 section.
It is preferable that a back side-substrate of the pair of substrates includes a projection for controlling alignment of liquid crystals contained in the liquid crystal layer,
the projection being arranged in the A3 section.
It is preferable that a liquid crystal layer side-surface of one of the pair of substrates is flat between the A1 and A3 sections,
the liquid crystal layer side-surface of the one of the pair of substrates is depressed in the A2 section,
a liquid crystal layer side-surface of the other substrate is flat between the A1 section and the A2 section, and
the liquid crystal layer side-surface of the other substrate projects in the A3 section.
It is preferable that the A2 section has an area smaller than that in the A3 section.
It is preferable that the reflective liquid crystal display device includes a liquid crystal display panel including: a pair of substrates and a liquid crystal layer interposed between the pair of substrates, wherein the reflective liquid crystal display device provides reflective display using a metal film of the liquid crystal display panel.
It is preferable that the reflective liquid crystal display device is a vertical alignment liquid crystal display device.
It is preferable that the reflective liquid crystal display device is a normally black liquid crystal display device.

### EFFECT OF THE INVENTION

According to the liquid crystal display device of the present invention, a plurality of sections including a section having a liquid crystal layer thickness larger than that in the transmission region are formed in the reflection region, and thereby the difference between the voltage-reflection luminance characteristics and the voltage-transmission luminance characteristics can be reduced without adopting the common multi-gap structure (the liquid crystal layer thickness in the reflection region is about half the liquid crystal layer thickness in the transmission region). As a result, production costs can be reduced, and simultaneously display qualities can be improved.

### BEST MODES FOR CARRYING OUT THE INVENTION

The present invention is mentioned below in more detail with reference to Embodiments and Examples, but not limited thereto.

### Embodiment 1

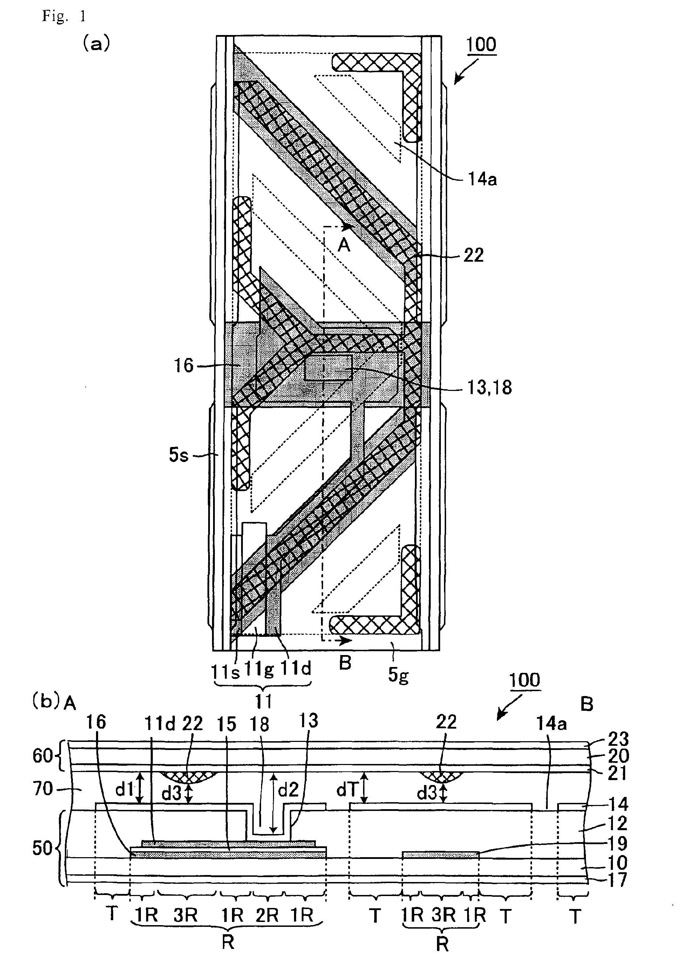

Fig. 1(a) is a plan view schematically showing a configuration of a liquid crystal display device in accordance with Embodiment 1. Fig. 1(b) is a cross-sectional view schematically showing the liquid crystal display device taken along line A-B.
A liquid crystal display device 100 in accordance with Embodiment 1 includes a back side-substrate 50, an observation side-substrate 60, and a liquid crystal layer 7 0 arranged between the back side-substrate 50 and the observation side-substrate 60. The liquid crystal display device 100 has a transmission region T and a reflection region R. Such a liquid crystal display device 100 is a semi-transmissive (transflective) liquid crystal display device that provides both of transmissive display and reflective display. When providing transmissive display, the device 100 uses a backlight (not shown) that is arranged on the back side of the back side-substrate 50 as a light source, and when providing reflective display, the device 100 uses external light that is made incident into the liquid crystal layer 70 from the observation side as a light source, for example.

The back side-substrate 50 includes: on a glass substrate 10, gate signal lines 5g and storage capacitor (Cs) wirings 16 that extend parallel to each other; a plurality of source signal lines 5s that extend parallel to each other and perpendicular to the gate signal lines 5g and the storage capacitor wirings 16; thin film transistors (TFTs) 11 arranged in each intersection between the gate signal lines 5g and the source signal lines 5s; and an insulating film 12 stacked on the TFT 11. The TFT 11 includes a gate electrode 11g, a source electrode 11s, and a drain electrode 11d. The gate electrode 11g is connected to the gate signal line 5g; the source electrode 11s is connected to the source signal line 5s, and the drain electrode 11d is electrically connected to a pixel electrode 14 through an opening 13 provided in the insulating film 12.

The opening 13 formed in the insulating film 12 is used to connect the pixel electrode 14 to the drain electrode 11d, and the opening 13 gives a depression 18 to the liquid crystal layer side-surface of the back side-substrate 50. The drain electrode 11d and the storage capacitor wiring 16 are arranged to face each other with the gate insulating film 15 of the TFT 11 therebetween. The drain electrode 11d and the storage capacitor wiring 16 form a storage capacitance (Cs). In the back side-substrate 50, a reflective film 19 is arranged to face a projection 22 and the like in order to shield light that might be leaked from the projection 22 that is arranged in the observation side-substrate 60 and to reflect external light. To the back side of the glass substrate 10, a circular polarizer 17 composed of a polarizer and a λ/4 retarder is attached. In the circular polarizer 17, an absorption axis of the polarizer and a phase delay axis of the λ/4 retarder make an angle of 45°.

The observation side-substrate 60 has a structure in which a color filter layer (not shown) such as a colored layer and a black matrix (BM) ; a pixel electrode 21; the projection 22; and an alignment film (not shown) are stacked on the glass substrate 20 in this order. Layers of red (R), green (G), and blue (B) are each arranged as the colored layer to correspond to the pixel electrode 14 in the back side-substrate 50. The pixel electrode 21 is formed over the entire surface as a common electrode. On the pixel electrode 21, the projection 22 for controlling alignment of liquid crystals contained in the liquid crystal layer 70 is formed. The projection 22 is arranged to correspond to a reflective film 19 that is arranged in the back side-substrate 50. The alignment film is arranged to cover the projection 22 and the pixel electrode 21. To the observation side of the glass substrate 20, a circular polarizer 23 composed of a polarizer and a λ/4 retarder is attached. In the circular polarizer 23, an absorption axis of the polarizer and a phase delay axis of the λ/4 retarder make an angle of 45°. The phase delay axis of the λ/4 retarder of the circular polarizer 17 and the phase delay axis of the λ/4 retarder of the circular polarizer 23 make an angle of 90°.

The liquid crystal layer 70 is constituted by nematic liquid crystals with negative dielectric anisotropy. The displaymode of the liquid crystal display device 100 is a vertical alignment (VA) mode. The liquid crystals are vertically aligned to an alignment film surface of the respective substrates 50 and 60 when an applied voltage is in an of f-state, and horizontally aligned thereto when an applied voltage is in an on-state. According to the present Embodiment, the pixel electrode 14 in the back side-substrate 50 is provided with a thin opening (slit) 14a, and the observation side-substrate 60 is provided with the projection 22, and thereby a multi-domain structure is formed. As a result, the disclination attributed to that the liquid crystal is tilted disorderly can be prevented, and uniform display can be observed regardless of the viewing angle.

A cell gap (liquid crystal layer thickness) dT in a transmission region T is uniform. In contrast, a reflection region R includes the first section 1R, the second section 2R, and the third section 3R. The first section 1R has a cell gap d1 that is the same as the dT in the transmission region T; the second section 2R has a cell gap d2 larger than the dT in the transmission region T; and the third section 3R has a cell gap d3 smaller than the dT in the transmission region T (d3<d1<d2, dl=dT). A region where the opening 14a of the pixel electrode 14 is formed, that is, a region where the pixel electrode 14 is not formed, in the respective sections, has a cell gap that corresponds to that in the case that the pixel electrode 14 is formed. The region where the opening of the pixel electrode is arranged, that is, the region where the pixel electrode 14 is not formed, does not belong to any of the first section, the second section, the third section, and the like, of the reflection region, and the transmission region.

According to the liquid crystal display device in accordance with the present Embodiment, the first section 1R, the second section 2R, and the third section 3R are formed in the reflection region R, and thereby the device can show the voltage-reflection luminance characteristics free from the inversion (gray scale inversion). As a result, visibility of an image that is displayed using external light can be improved. In addition, there is no need to perform photolithography for multi-gap, and so, the production costs can be reduced. Further, the storage capacitance wiring 16, original metal films such as source metal and gate metal, and the like, are used as the reflective film 19. Accordingly, there is no need to additionally forma reflective film only for reflective display, and so the liquid crystal display device can be produced through production processes for a transmissive liquid crystal display device without any additional processes. Further, the same material can be used as a material for the pixel electrode 14 between the transmission region T and the reflection region R.
So the flicker due to the difference in optimum counter voltage between the transmission region T and the reflection region R can be effectively reduced.

The cell gap dT in the transmission region T and the cell gap d1 in the first section 1R are the same, and so the first section 1R and the transmission region T can be formed in the same process. In addition, the original opening 13 formed in the insulating film 12 is used for forming the second section 2R, and so an additional opening and the like is not needed for forming the second section 2R. This is preferable in view of costs.

### Example 1

The liquid crystal display device in Example 1 has the same configuration as the liquid crystal display device in accordance with Embodiment 1. The following Table 1 shows a cell gap and a proportion of an area of each section in the reflection region R.

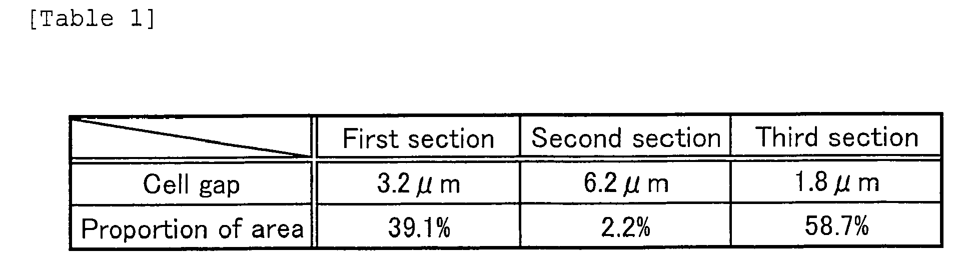

Fig. 2(a) is a plan view schematically showing a configuration of the depression 18 in the back side-substrate 50 in accordance with Example 1. Fig. 2 (b) is a cross-sectional view schematically showing the depression 18 taken along line A-B in Fig. 2(a). A width W1 of a bottom b of the depression 18 is 11 µm, and a length L1 thereof is 7 µm.
A width W2 of a tapered part s of the depression 18 and a length L1 thereof are each 9 µm. The tapered part has a tapered angle θ of 20°. A depth P of the depression 18 is 3.0 µm. A height of the projection 22 is 1.4 µm.

### Comparative Example 1

Fig. 3(a) is a plan view schematically showing a configuration of a liquid crystal display device in accordance with Comparative Example 1. Fig. 3 (b) is a cross-sectional view schematically showing the device taken along line A-B in Fig. 3(a).
A liquid crystal display device 500 in accordance with the present Comparative Example is the same as in Example 1, except that the back side-substrate 50 has no depression 18 (there is no second section 2R). The following Table 2 shows a cell gap and a proportion of an area of each section in the reflection region R.

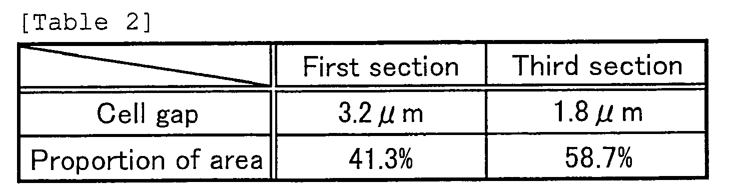

### Comparison of Example 1 with Comparative Example 1

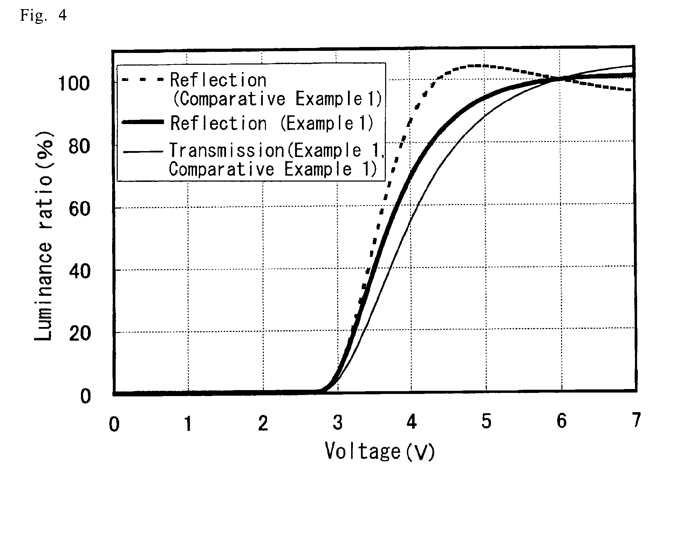

The liquid crystal display devices in Example 1 and Comparative Example 1 were measured for voltage-transmission luminance characteristics and voltage-reflection luminance characteristics. The following Table 3 and Fig. 4 show the results. As a measurement apparatus, an LCD evaluation apparatus (OTSUKA ELECTRONICS CO., LTD., trade name: LCD 5200) was used to irradiate the liquid crystal display device with diffused light from this measurement apparatus, and while a voltage applied between the pixel electrodes was varied, reflected light at each applied voltage was measured using a light-receiving element of the measurement apparatus. The measurement direction is a direction perpendicular to the device surface (front direction).

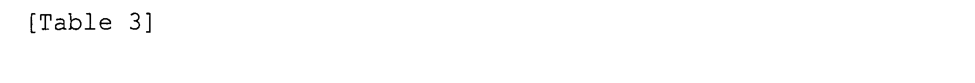

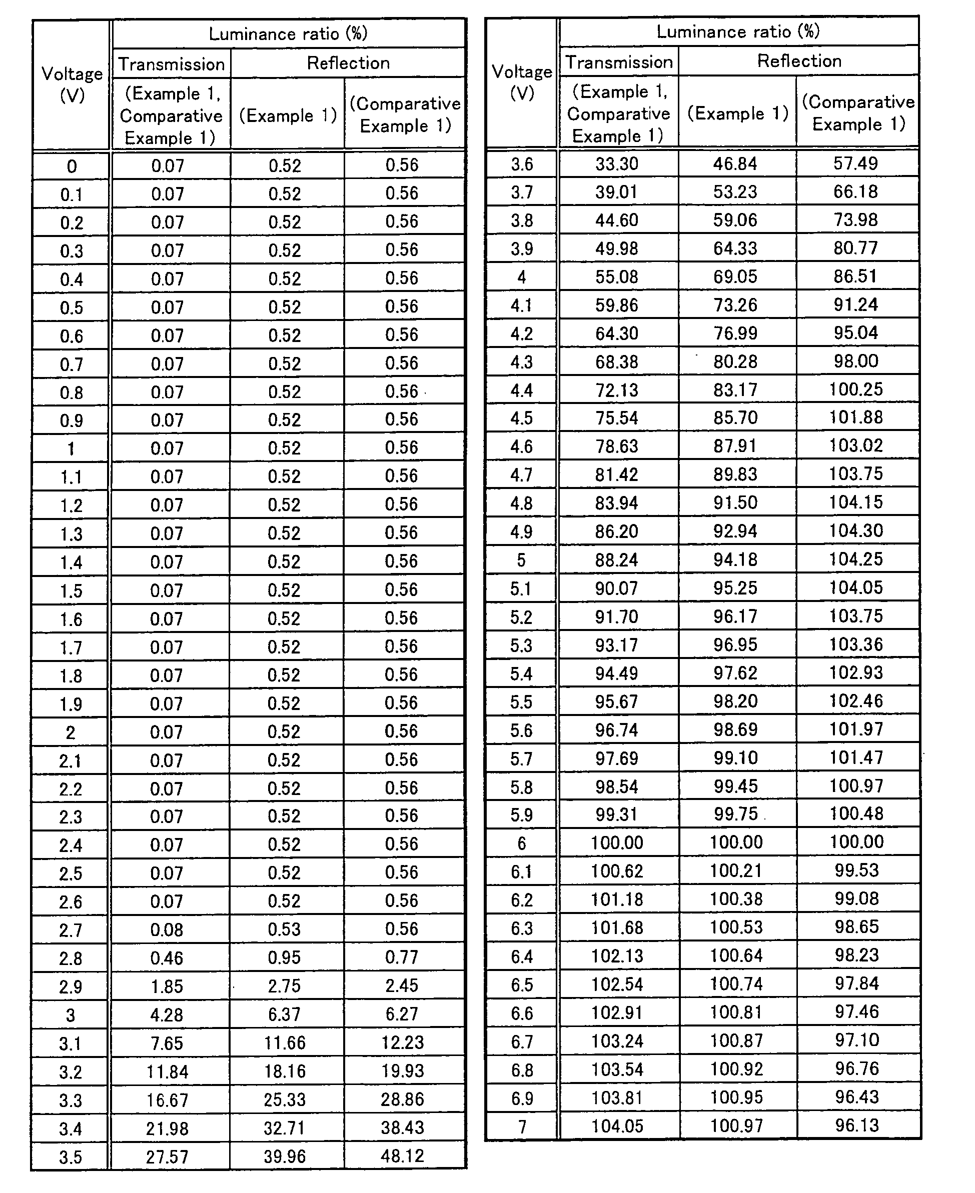

As shown in Table 3 and Fig. 4, the two voltage transmission characteristics in Comparative Example 1 and Example 1 show the same tendency because the light that is used for the transmissive light passes through the section with a cell gap dT in each device. The inversion of the voltage-reflection luminance characteristics (the gray scale inversion) is not observed in Example 1, although in Comparative Example 1, the reflection luminance begins to monotonically decrease at an applied voltage of about 5.0 V (4.9 V).

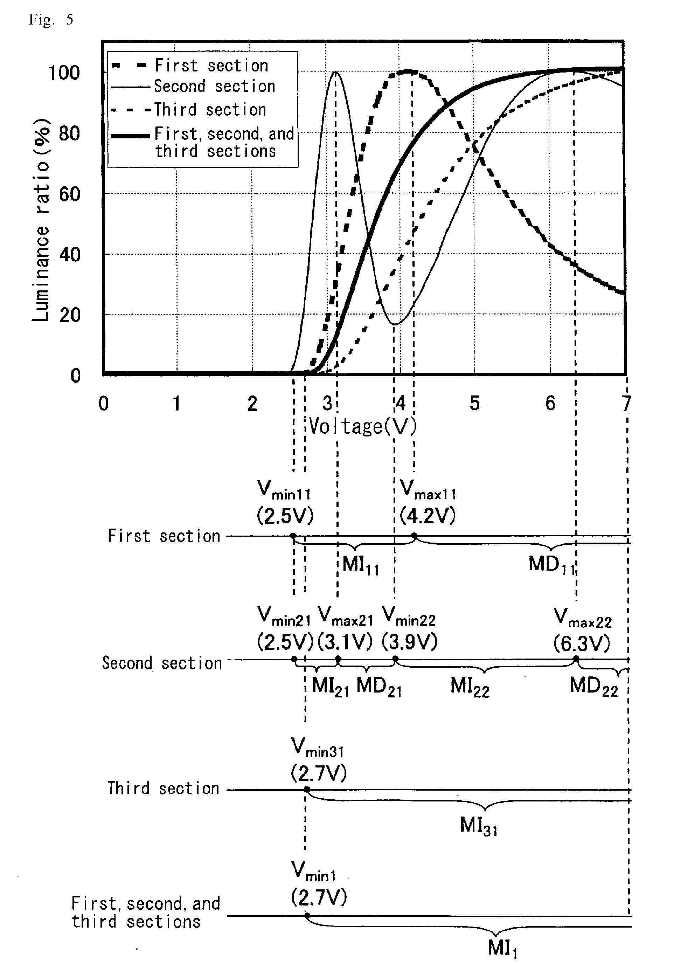

The difference in the voltage-reflection luminance
characteristics between Example 1 and Comparative Example 1 is mentioned below.
The following Table 4 and Fig. 5 show measurement results of: the voltage-reflection luminance characteristics each in the first, second, and third sections; and the voltage-reflection luminance characteristics of the reflection region, obtained by compensating the voltage-reflection luminance characteristics in the first, second, and third sections for one another.

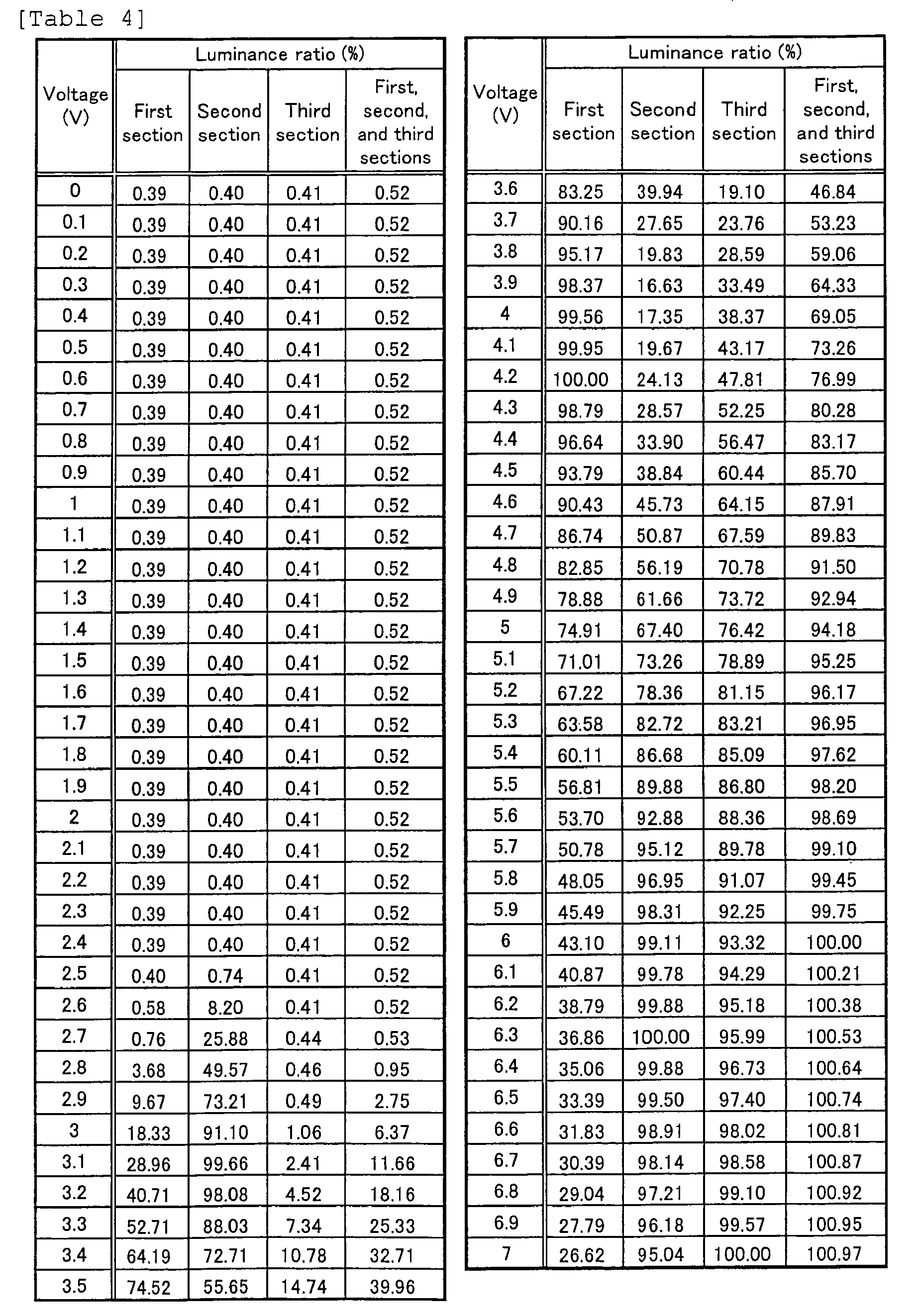

As shown in Table 4 and Fig. 5, the first section 1R shows the first local minimum voltage Vmin11 of 2.5 V and the first local maximum voltage Vmax11 of 4.2 V; the second section 2R shows the first local minimum voltage Vmin21 of 2.5V, the first local maximum voltage Vmax21 of 3.1 V, the second local minimum voltage Vmin22 of 3.9V, and the second local maximum voltage Vmax22 of 6.3V. The third section 3R shows the first local minimum voltage Vmin31 of 2.7V and the first local maximum voltage Vmax31 of 7.0V or more. That is, the second local minimum voltage Vmin22 of the second section 2R is smaller than the first local maximum voltage Vmax11 of the first section 1R; and the second local maximum voltage Vmax22 of the second section 2R is larger than the first local maximum voltage Vmax11 of the first section 1R. The first local minimum voltage Vmin31 of the third section 3R is smaller than the first local maximum voltage Vmax31 of the first section 1R; and the first local maximum voltage Vmax31 of the third section 3R is larger than the first local maximum voltage Vmax31 of the first section 1R.

In Comparative Example 1, the reflection region R is composed of the first section 1R and the third section 3R, and so the voltage-reflection luminance characteristics of the first section 1R and those of the third section 3R are compensated for each other to give the voltage-reflection luminance characteristics of the reflection region R. Accordingly, in Comparative Example 1, the reduction in luminance at the first monotonic decrease part of the first section needs to be compensated only by the increase in luminance at the first monotonic increase part of the third section. In this case, the compensation that is attributed to the first monotonic increase of the third section is not enough, and so the inversion of the voltage-reflection luminance characteristics (the gray scale inversion) is observed in the reflection region R. In Example 1, in contrast, the reflection region R is composed of the first section 1R, the second section 2R, and the third section 3R. Accordingly, the voltage-reflection luminance characteristics of the first, second, and third sections 1R, 2R, and 3R are compensated for each other to give the voltage-reflection luminance characteristics of the reflection region R. That is, the first monotonic decrease part MD11, shown around the first local maximum voltage Vmax11, of the first section 1R can be compensated by the second monotonic increase part MI22 of the second section 2R and the first monotonic increase part MI31 of the third section 3R. Accordingly, the first local maximum voltage in the entire reflection region can be adjusted to more than 7.0 V.

As mentioned above, the second section 2R having the depression 18, that is, the second section 2R having a cell gap d2 larger than the cell gap dT in the transmission region T is formed, and thereby the inversion can be prevented. Further, the difference between the voltage-reflection luminance characteristics and the voltage-transmission luminance characteristics can be reduced.

### Embodiment 2

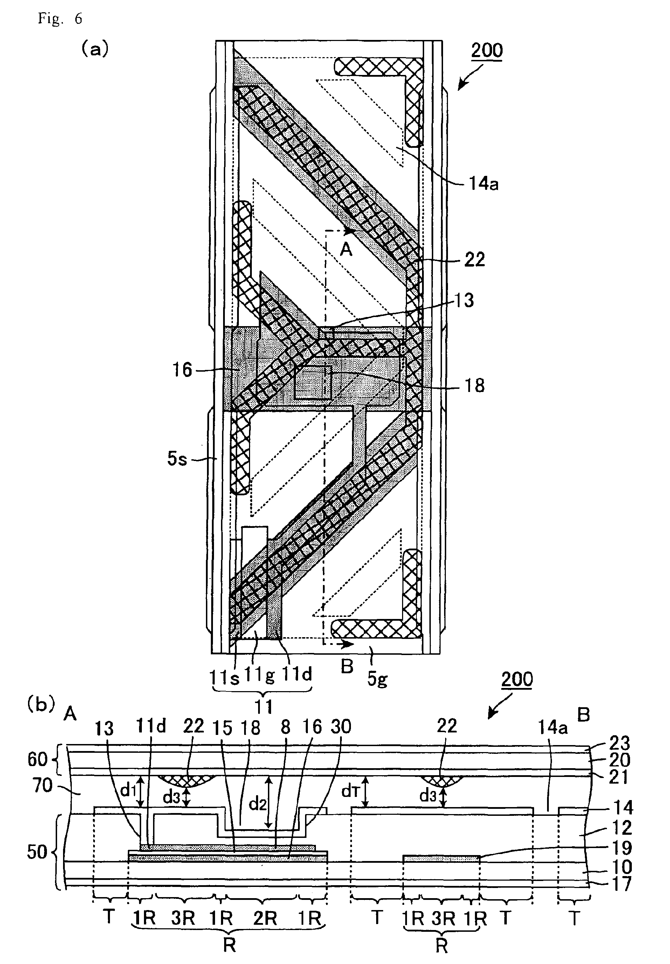

Fig. 6(a) is a plan view schematically showing a configuration of a liquid crystal display device in accordance with Embodiment 2. Fig. 6(b) is a cross-sectional view schematically showing the device taken along line A-B in Fig. 6(a).
A liquid crystal display device 200 in accordance with Embodiment 2 is the same as in Embodiment 1, except that a depression 30, which is formed in the insulating film 12 in addition to the opening 13, forms the depression 18 on the liquid crystal layer side-surface of the back side-substrate 50. Accordingly, according to the present Embodiment, the same operation and advantages as in Embodiment 1 can be obtained.

### Example 2

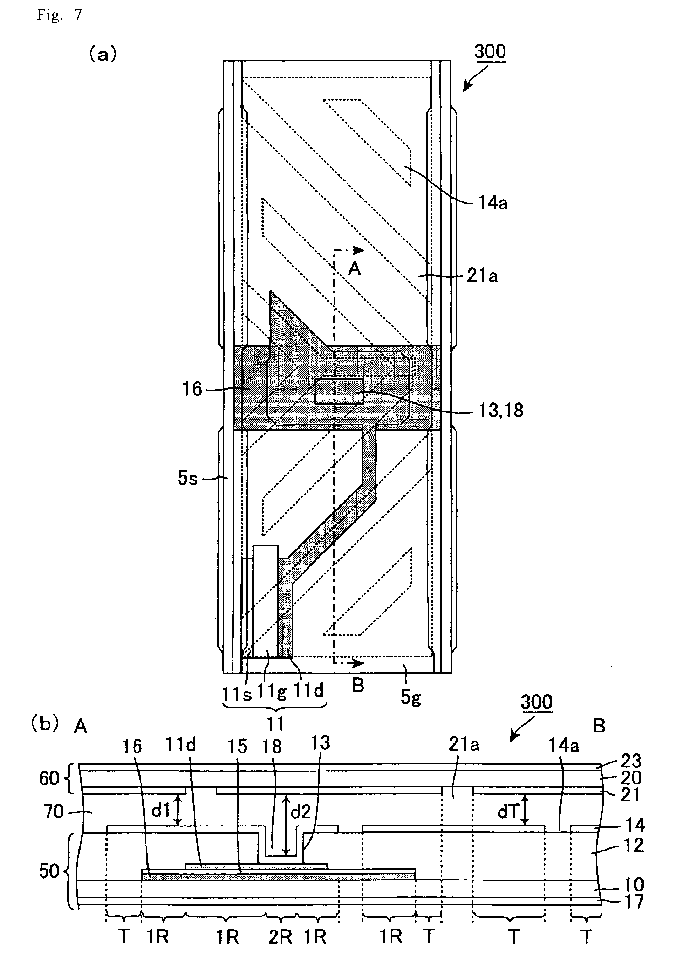

Fig. 7(a) is a plan view schematically showing a configuration of a liquid crystal display device in accordance with Example 2. Fig. 7(b) is a cross-sectional view schematically showing the device taken along line A-B in Fig. 7(a).
A liquid crystal display device 300 in accordance with Example 2 is the same as that in Embodiment 1, except that the pixel electrode (common electrode) 21 is provided with an opening (slit) 24 instead of the alignment control projection, and that the reflection region R is composed of the first section 1R and the second section 2R. The following Table 5 shows a cell gap and a proportion of an area of each section in the reflection region R.

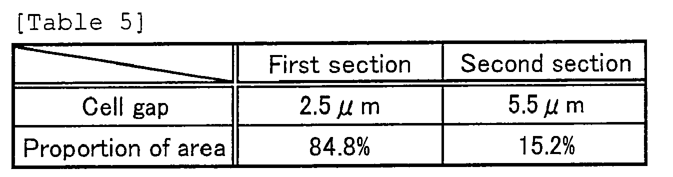

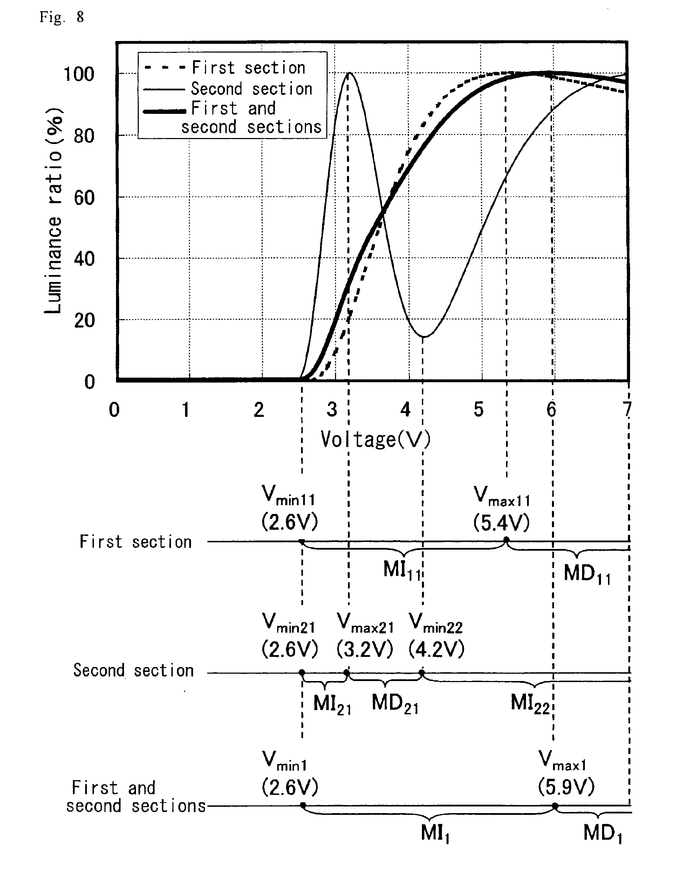

The liquid crystal display device in accordance with Example 2 was measured for the voltage-transmission luminance characteristics and the voltage-reflection luminance characteristics. The following Table 6 and Fig. 8 show the results. As a measurement apparatus, an LCD evaluation apparatus (OTSUKA ELECTRONICS CO., LTD., trade name: LCD 5200) was used to irradiate the liquid crystal display device with diffused light from this measurement apparatus, and while a voltage applied between the pixel electrodes was varied, reflected light at each applied voltage was measured using a light-receiving element of the measurement apparatus. The measurement direction is a direction perpendicular to the device surface (front direction).

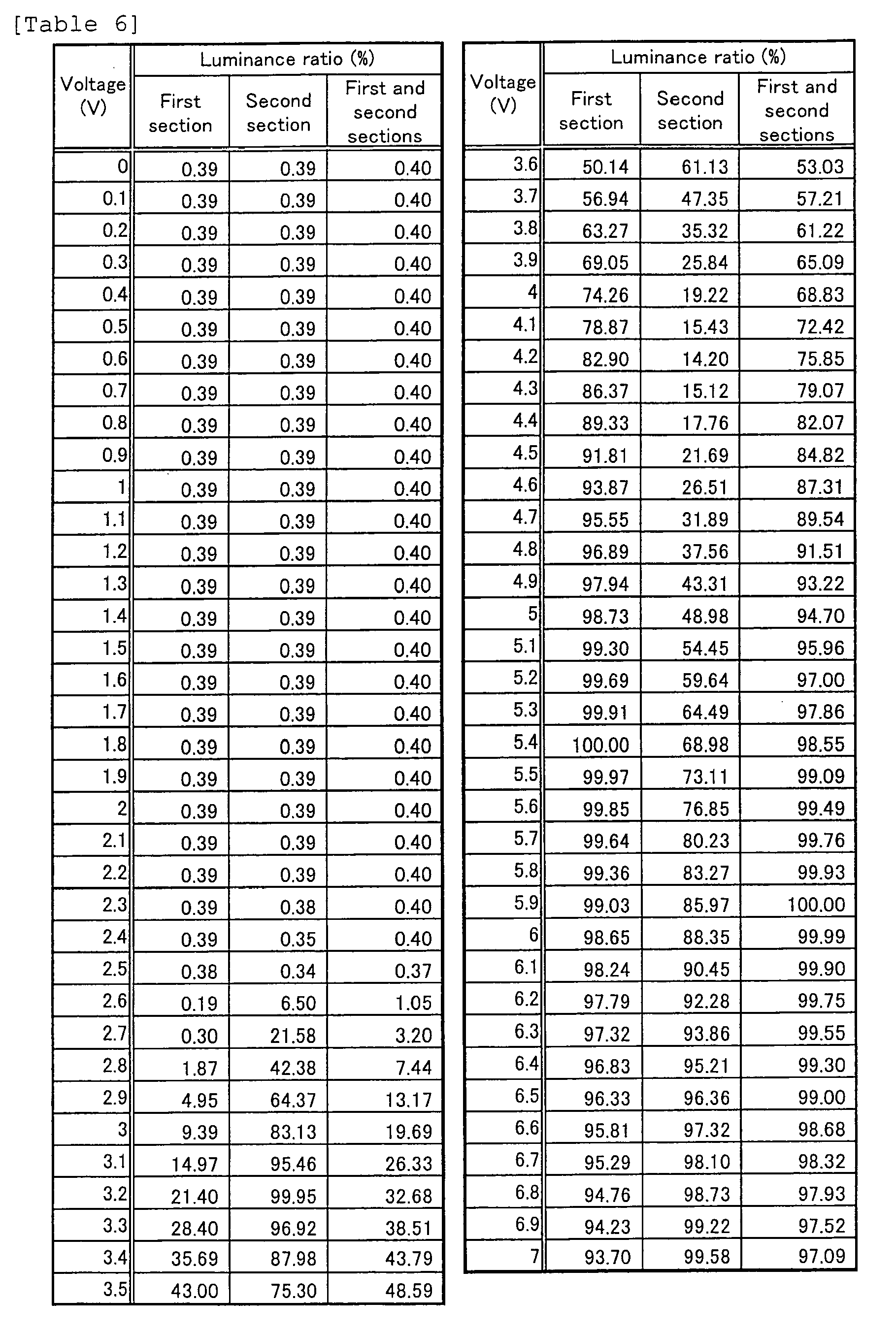

As shown in Table 6 and Fig. 8, according to the present Example, the first monotonic decrease part MD11, shown around the first local maximum voltage Vmax11, of the first section 1R is compensated by the second monotonic increase part MI22 of the second section 2R, that is, the voltage-luminance characteristics of the first section 1R and those of the second section 2R are compensated for each other, and thereby the reflection luminance of the reflection region R is adjusted so as to monotonically increase until the applied voltage increases up to about 6V.

### Example 3

A liquid crystal display device in accordance with Example 3 is basically the same as in Embodiment 1, except that it is a normally white one. The reflection region R is composed of: the first section 1R having the same cell gap as in the transmission region T; the second section 2R having a cell gap larger than that in the first section 1R; and the third section 3R having a cell gap smaller than that in the first section 1R. The following Table 7 shows a cell gap and a proportion of an area of each section in the reflection region R.

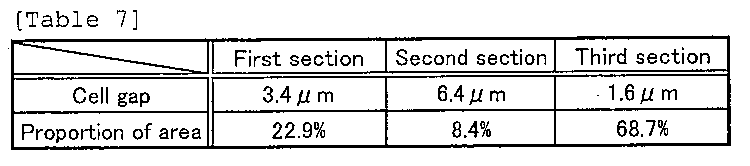

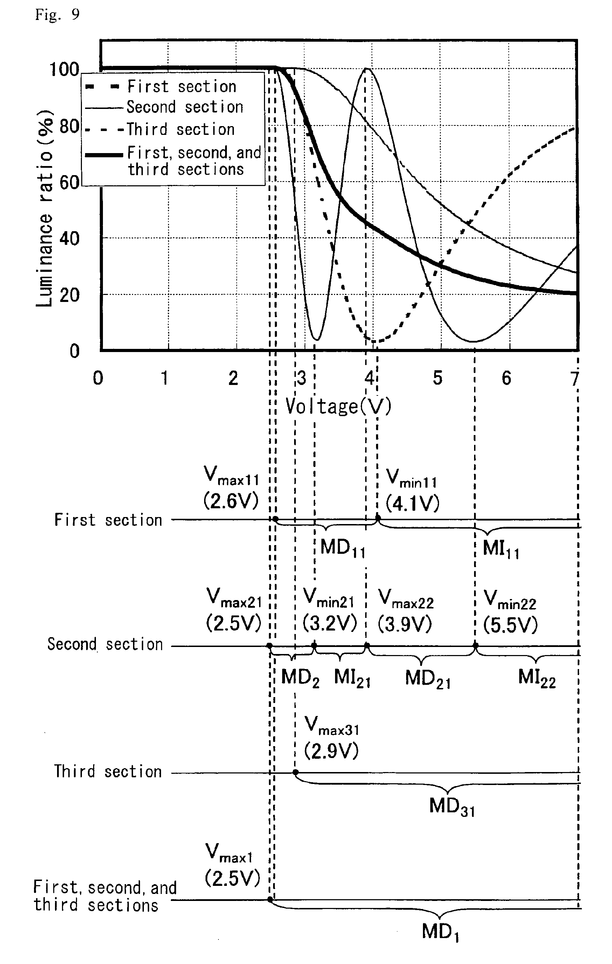

The liquid crystal display device in accordance with Example 3 was measured for the voltage-transmission luminance characteristics and the voltage-reflection luminance characteristics. The following Table 8 and Fig. 9 show the results. As a measurement apparatus, an LCD evaluation apparatus (OTSUKA ELECTRONICS CO., LTD., trade name: LCD 5200) was used to irradiate the liquid crystal display device with diffused light from this measurement apparatus, and while a voltage applied between the pixel electrodes was varied, reflected light at each applied voltage was measured using a light-receiving element of the measurement apparatus. The measurement direction is a direction perpendicular to the device surface (front direction).

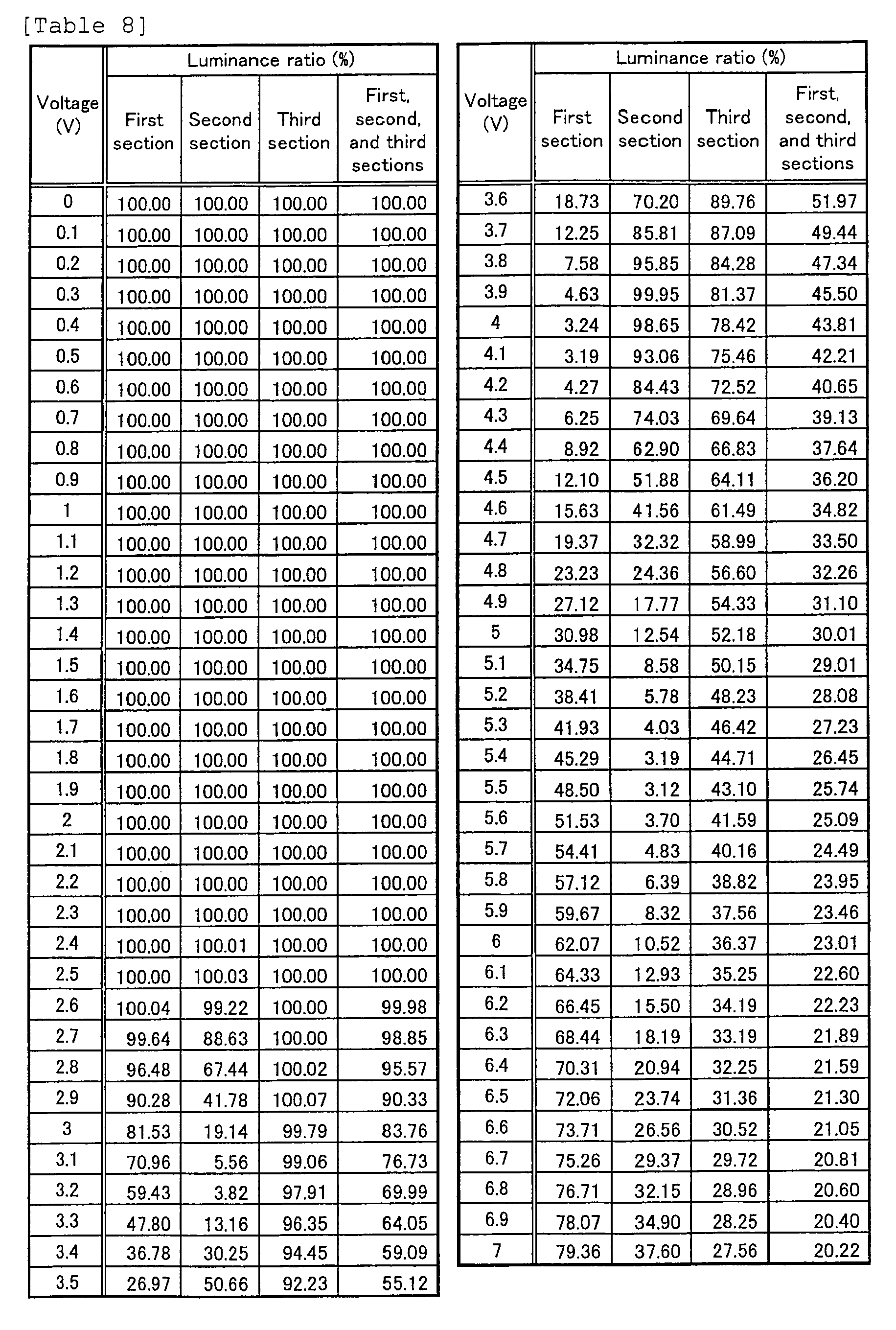

As shown in Table 8 and Fig. 9, in the present Example, the first monotonic increase part MI11, shown around the first local minimum voltage Vmin11, of the first section 1R is compensated by the second monotonic decrease part MD21 of the second section 2R and the first monotonic increase part MD31 of the third section 3R. That is, the voltage-luminance characteristics of the first section 1R to the third section 3R are compensated for each other, and thereby the reflection luminance of the reflection region R is adjusted so as to monotonically decrease until the applied voltage increases up to about 7V.

Materials for the components constituting the liquid crystal display device and methods for forming the components are exemplified below, but not limited thereto.
Examples of materials for the gate signal line 5g, the gate electrode 11g, the storage capacitor (Cs) wiring 16, and the reflective film 19 include metals such as aluminum (Al), chromium (Cr), and tantalum (Ta). The gate signal line 5g, the gate electrode 11g, the storage capacitor (Cs) wiring 16, and the reflective film 19 are each formed, for example, by forming a film by sputtering and then patterning the film by photolithography. Examples of a material for the source signal line 5s, the source electrode 11g, and the drain electrode 11d include Al, Cr, and Ti (titanium). The source signal line 5s, the source electrode 11g, and the drain electrode 11d are each formed, for example, by forming a film by sputtering and then patterning the film by photolithography. Organic films and the like are mentioned as a material for the insulating film 12, and the insulating film 12 is formed by spin coating, for example. Tantalum oxide (TaOx) and the like is mentioned as a material for the gate insulating film 15, and the gate insulating film 15 is formed by anodic oxidation, for example. The opening 13 and the depression 30 of the insulating film 12 are formed by photolithography and the like. The pixel electrodes 14 and 21 are formed by, for example, forming a film of a transparent conductive material such as ITO (indium tin oxide), indium zinc oxide, and zinc oxide by sputtering and then patterning the film by photolithography. Photolithography is employed to form the openings (slits) 14a and 21a of the pixel electrodes 14 and 21. Phenol novolac materials and the like are mentioned as a material of the projection 22. The projection 22 is formed, for example, by forming a film by spin coating and then patterning the film by photolithography. The vertical alignment film is formed by, for example, applying polyimide resin by flexography and then sintering the resin. Examples of a material for the colored layer include acrylic resins into which a colored pigment has been dispersed, and photolithography and the like can be used for forming the colored layer. Acrylic resins into which carbon fine particles have been dispersed are mentioned as a material for black matrix, and photolithography and the like can be used for forming the black matrix. Acrylic resin and the like are mentioned as a material for overcoat layer, and spin coating and the like can be used for forming the overcoat layer. Dyed polyvinyl alcohols and the like are mentioned as a material for the polarizer, and the dyed polyvinyl alcohols are monoaxially stretched to be used as the polarizer, for example. Polycarbonates, norbornene, and the like, are mentioned as a material for the λ/4 retarder, and these materials are monoaxially or biaxially stretched to be used for the λ/4 retarder, for example.

The VA semi-transmissive liquid crystal display devices are mentioned in the present Embodiments and Examples, but not limited thereto. Even if the devices are in other types of display mode, the same operation and advantages mentioned above are exhibited.

The present application claims priority to Patent Application No. 2007-095163 filed in Japan on March 30, 2007 under the Paris Convention and provisions of national law in a designated State, the entire contents of which are hereby incorporated by reference.

### BRIEF DESCRIPTION OF DRAWINGS

[Fig. 1]
   Fig. 1(a) is a plan view schematically showing a configuration of the liquid crystal display device in accordance with Embodiment 1. Fig. 1(b) is a cross-sectional view schematically showing the device taken along line A-B in Fig. 1(a).
[Fig. 2]

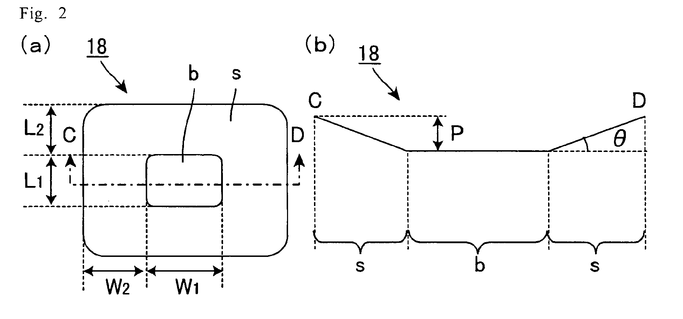

   Fig. 2(a) is a plan view schematically showing a configuration of the depression of the back side-substrate in accordance with Embodiment 1. Fig. 2 (b) is a cross-sectional view schematically showing the device taken along line C-D in Fig. 2(a).
[Fig. 3]

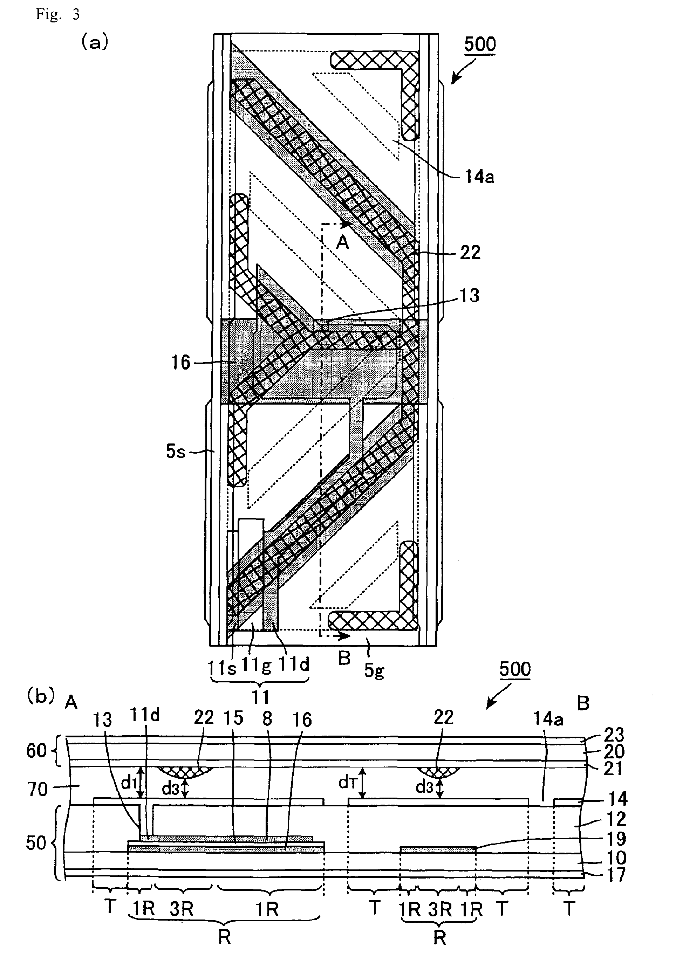

   Fig. 3(a) is a plan view schematically showing a configuration of the liquid crystal display device in accordance with Comparative Example 1. Fig. 3 (b) is a cross-sectional view schematically showing the device taken along line A-B in Fig. 3(a).
[Fig. 4]
   Fig. 4 is a graph showing voltage-transmission luminance characteristics and voltage-reflection luminance characteristics each of the liquid crystal display devices in Example 1 and Comparative Example 1.
[Fig. 5]
   Fig. 5 is a graph showing voltage-reflection luminance characteristics each of the first section, the second section, and the third section, and voltage-reflection luminance characteristics of the reflection region, obtained by compensating the voltage-reflection luminance characteristics in the first to third sections for one another in Example 1 and Comparative Example 1.
[Fig. 6]
   Fig. 6(a) is a plan view schematically showing a configuration of the liquid crystal display device in accordance with Embodiment 2. Fig. 6(b) is a cross-sectional view schematically showing the device taken along line A-B in Fig. 6(a).
[Fig. 7]
   Fig. 7(a) is a plan view schematically showing a configuration of the liquid crystal display device in accordance with Example 2. Fig. 7(b) is a cross-sectional view schematically showing the device taken along line A-B in Fig. 7(a).
[Fig. 8]
   Fig. 8 is a graph showing voltage-reflection luminance characteristics each of the first section and the second section, and voltage-reflection luminance characteristics of the reflection region, obtained by compensating the voltage-reflection luminance characteristics in the first and second sections for each other in Example 2.
[Fig. 9]
   Fig. 9 is a graph showing voltage-reflection luminance characteristics each of the first to third sections, and voltage-reflection luminance characteristics of the reflection region, obtained by compensating the voltage-reflection luminance characteristics in the first to third sections for one another in Example 3.
[Fig. 10]
   Fig. 10 is a graph showing voltage-reflection luminance characteristics each of the first and second sections, and voltage-reflection luminance characteristics of the reflection region, obtained by compensating the voltage-reflection luminance characteristics in the first and second sections for each other in accordance with the liquid crystal display device of the present invention.

### EXPLANATION OF NUMERALS AND SYMBOLS

1R: The first section
2R: The second section
3R: The third section
5g: Gate signal line
5s: Source signal line
10, 20: Glass substrate
11: Thin film transistor
11d: Drain electrode
11g: Gate electrode
11s: Source electrode
12: Insulating film
13: Opening of insulating film
14: Pixel electrode
14a: Opening (slit) of pixel electrode
15: Gate insulating film
16: Storage capacitor wiring
17, 23: Circular polarizer
18: Depression in back side-substrate
19: Reflective film
21: Pixel electrode (common electrode)
21a: Opening (slit) of pixel electrode (common electrode)
22: Alignment control projection (rib)
30: Depression in insulating film
50: Back side-substrate
60: Observation side-substrate
70: Liquid crystal layer
100, 300, 500: Liquid crystal display device
b: Bottom of depression in back side-substrate
d1: Cell gap in the first section
d2: Cell gap in the second section
d3: Cell gap in the third section
dT: Cell gap in transmission region
L1: Length of bottom of depression in back side-substrate
L2: Width of tapered part of depression in back side-substrate
MD1: The first monotonic decrease part of the reflection region
MD11: The first monotonic decrease part of the first section
MD21: The first monotonic decrease part of the second section
MD22: The second monotonic decrease part of the second section
MI1: The first monotonic increase part of the reflection region
MI11: The first monotonic increase part of the first section
MI21: The first monotonic increase part of the second section
MI22: The second monotonic increase part of the second section
MI31: The first monotonic increase part of the third section
P: Depth of depression in the back side-substrate
s: Tapered part of depression in the back side-substrate
T: Transmission region
R: Reflection region
Vmax1: The first local maximum voltage of reflection region
Vmax11: The first local maximum voltage of the first section
Vmax21: The first local maximum voltage of the second section
Vmax22: The second local maximum voltage of the second section
Vmax31: The first local maximum voltage of the third section
Vmin1: The first local minimum voltage of reflection region
Vmin11: The first local minimum voltage of the first section
Vmin21: The first local minimum voltage of the second section
Vmin22: The second local minimum voltage of the second section
Vmin31: The first local minimum voltage of the third section
W1: Width of bottom of depression in back side-substrate
W2: Width of tapered part of depression in back side-substrate
θ: Tapered angle of depression in back side-substrate

## Claims

1. A liquid crystal display device comprising:
a pair of substrates; and
a liquid crystal layer interposed between the pair of substrates,
wherein the liquid crystal display device includes a transmission region and a reflection region,
the reflection region includes a first section and a second section,
a thickness of the liquid crystal layer in the first section is larger than half of but equal to or smaller than a thickness of the liquid crystal layer in the transmission region, and
a thickness of the liquid crystal layer in the second section is larger than the thickness of the liquid crystal layer in the transmission region.

2. The liquid crystal display device according to Claim 1,
wherein the liquid crystal display device is a normally black liquid crystal display device,
a second local minimum voltage of the second section is not larger than a first local maximumvoltage of the first section, and
a second local maximum voltage of the second section is larger than the first local maximum voltage of the first section.

3. The liquid crystal display device according to Claim 1,
wherein the liquid crystal display device is a normally white liquid crystal display device,
a second local maximum voltage of the second section is not larger than a first localminimumvoltage of the first section, and
a second local minimum voltage of the second section is larger than the first local minimum voltage of the first section.

4. The liquid crystal display device according to Claim 1,
wherein the thickness of the liquid crystal layer in the first section is the same as the thickness of the liquid crystal layer in the transmission region.

5. The liquid crystal display device according to Claim 4,
wherein a liquid crystal layer side-surface of one of the pair of substrates is flat between the transmission region and the first section,
the liquid crystal layer side-surface of the one of the pair of substrates is depressed in the second section,
a liquid crystal layer side-surface of the other substrate is flat among the transmission region, the first section, and the second section.

6. The liquid crystal display device according to Claim 5,
wherein at least one of the pair of substrates includes:
a conductive part;
an insulating film covering the conductive part; and
a pixel electrode formed above the insulating film,
the pixel electrode being connected to the conductive part through an opening formed in the insulating film in the second section, and
the opening depresses the liquid crystal layer side-surface of the at least one of the pair of substrates in the second section.

7. The liquid crystal display device according to Claim 5,
wherein at least one of the pair of substrates includes a pixel electrode and an insulating film formed below the pixel electrode, and
the insulating film has a depression that depresses the liquid crystal layer side-surface of the at least one of the pair of substrates in the second section.

8. The liquid crystal display device according to Claim 1,
wherein the second section has an area smaller than an area of the first section.

9. The liquid crystal display device according to Claim 1.
wherein a voltage applied to the liquid crystal layer is the same between the first section and the second section.

10. The liquid crystal display device according to Claim 1,
wherein the reflection region further includes a third section, and
a thickness of the liquid crystal layer in the third section is smaller than the thickness of the liquid crystal layer in the first section.

11. The liquid crystal display device according to Claim 10,
wherein the liquid crystal display device is a normally black liquid crystal display device,
a second local minimum voltage of the second section is not larger than a first localmaximumvoltage of the first section,
a second local maximum voltage of the second section is larger than the first local maximum voltage of the first section,
a first local minimum voltage of the third section is not larger than the first local maximum voltage of the first section, and
a first localmaximum voltage of the third section is larger than the first local maximum voltage of the first section.

12. The liquid crystal display device according to Claim 10,
wherein the liquid crystal display device is a normally white liquid crystal display device,
a second local maximum voltage of the second section is not larger than a first localminimumvoltage of the first section,
a second local minimum voltage of the second section is larger than the first local minimum voltage of the first section,
a first local maximum voltage of the third section is not larger than the first local minimum voltage of the first section,
and
a first localminimum voltage of the third section is larger than the first local minimum voltage of the first section.

13. The liquid crystal display device according to Claim 10,
wherein a voltage applied to the liquid crystal layer in the third section is smaller than a voltage applied to the liquid crystal layer in the first section.

14. The liquid crystal display device according to Claim 13,
wherein an observation side-substrate of the pair of substrates includes a projection for controlling alignment of liquid crystals contained in the liquid crystal layer,
the projection being arranged in the third section.

15. The liquid crystal display device according to Claim 13,
wherein a back side-substrate of the pair of substrates includes a projection for controlling alignment of liquid crystals contained in the liquid crystal layer,
the projection being arranged in the third section.

16. The liquid crystal display device according to Claim 10,
wherein a liquid crystal layer side-surface of one of the pair of substrates is flat among the transmission region, the first section, and the third section,
the liquid crystal layer side-surface of the one of the pair of substrates is depressed in the second section,
a liquid crystal layer side-surface of the other substrate is flat among the transmission region, the first section, and the second section, and
the liquid crystal layer side-surface of the other substrate projects in the third section.

17. The liquid crystal display device according to Claim 10,
wherein the second section has an area smaller than an area of the third section.

18. The liquid crystal display device according to Claim 1,
wherein the liquid crystal display device includes a liquid crystal display panel including: a pair of substrates; a liquid crystal layer interposed between the pair of substrates; and a metal film, and
the liquid crystal display device provides reflective display using the metal film.

19. The liquid crystal display device according to Claim 1,
wherein the liquid crystal display device is a vertical alignment liquid crystal display device.

20. The liquid crystal display device according to Claim 1,
wherein the liquid crystal display device is a normally black liquid crystal display device.
